# EUROPEAN PATENT APPLICATION

(11) **EP 4 815 495 A1**
(43) Date of publication of application: **30.09.2026**
(21) Application number: 24913227.5
(22) Date of filing: 04.11.2024
(51) Int. Cl.: H04R 1/10, G06F 3/16

(54) **ELECTRONIC DEVICE, METHOD, AND NON-TRANSITORY COMPUTER-READABLE RECORDING MEDIUM FOR ADJUSTING VOLUME OF AUDIO SIGNAL**

(30) Priority: 29.12.2023 KR 20230197970; 02.01.2024 KR 20240000625; 08.03.2024 KR 20240033170
(71) Applicant: Samsung Electronics Co., Ltd., Suwon-si, Gyeonggi-do 16677 (KR)
(72) Inventor: SHIM, Hyeri, Suwon-si Gyeonggi-do 16677 (KR); SEO, Mira, Suwon-si Gyeonggi-do 16677 (KR); KIM, Sangheon, Suwon-si Gyeonggi-do 16677 (KR); LIM, Yeunwook, Suwon-si Gyeonggi-do 16677 (KR)
(74) Representative: Appleyard Lees IP LLP
(86) International application number: PCT/KR2024/017198
(87) International publication number: WO 2025/143513

(57) **Abstract**

Disclosed is an electronic device. The electronic device may acquire a first audio signal from an external electronic device via a communication circuit. The electronic device may identify a second audio signal generated by the electronic device. The electronic device may acquire an input for adjusting audio volume while outputting first audio based on the first audio signal and second audio based on the second audio signal. The electronic device may adjust, on the basis of the input, the volume of at least one audio selected from the first audio or the second audio.

## Description

### [Technical Field]

The following descriptions relate to an electronic device, a method, and a non-transitory computer readable storage medium that control a volume of an audio signal.

### [Background Art]

An electronic device may connect a call with another electronic device through communication circuitry. The electronic device may output sound based on an audio signal obtained from the another electronic device during the call connection with the another electronic device. The electronic device may control a volume of the sound output through a speaker during the call connection.

### [Disclosure]

### [Technical Solution]

An electronic device is disclosed. The electronic device may include communication circuitry. The electronic device may include at least one processor. The electronic device may include memory including one or more storage media storing instructions. The instructions, when executed, individually or collectively, by the at least one processor, may cause the electronic device to obtain a first audio signal from an external electronic device through the communication circuitry. The instructions, when executed, individually or collectively, by the at least one processor, may cause the electronic device to identify a second audio signal generated by the electronic device. The instructions, when executed, individually or collectively, by the at least one processor, may cause the electronic device to, while outputting first audio based on the first audio signal and second audio based on the second audio signal, obtain an input for adjusting an intensity of audio. The instructions, when executed, individually or collectively, by the at least one processor, may cause the electronic device to, based on the input, adjust an intensity of at least one audio selected from the first audio or the second audio.

A method is disclosed. The method may include obtaining a first audio signal from an external electronic device through the communication circuitry. The method may include identifying a second audio signal generated by the electronic device. The method may include, while outputting first audio based on the first audio signal and second audio based on the second audio signal, obtaining an input for adjusting an intensity of audio. The method may include, based on the input, adjusting an intensity of at least one audio selected from the first audio or the second audio.

A non-transitory computer readable storage medium is disclosed. The non-transitory computer readable storage medium may store a program including instructions. The instructions, when executed, individually or collectively, by the at least one processor, may cause the electronic device to obtain a first audio signal from an external electronic device through the communication circuitry. The instructions, when executed, individually or collectively, by the at least one processor, may cause the electronic device to identify a second audio signal generated by the electronic device. The instructions, when executed, individually or collectively, by the at least one processor, may cause the electronic device to, while outputting first audio based on the first audio signal and second audio based on the second audio signal, obtain an input for adjusting an intensity of audio. The instructions, when executed, individually or collectively, by the at least one processor, may cause the electronic device to, based on the input, adjust an intensity of at least one audio selected from the first audio or the second audio.

### [Description of the Drawings]

FIG. 1 is a block diagram of an electronic device in a network environment according to various embodiments.
FIG. 2A is a block diagram of an electronic device according to an embodiment.
FIG. 2B is a flowchart exemplifying an operation of an electronic device according to an embodiment.
FIG. 3A illustrates an example of a screen displayed by an electronic device according to an embodiment.
FIG. 3B illustrates an example of a screen displayed by an electronic device according to an embodiment.
FIG. 4A illustrates an example of a screen displayed by an electronic device according to an embodiment.
FIG. 4B illustrates an example of a screen displayed by an electronic device according to an embodiment.
FIG. 4C is a diagram exemplifying a time overlap between audio signals output from an electronic device according to an embodiment.
FIG. 4D illustrates an example of a screen displayed by an electronic device according to an embodiment.
FIG. 5 is a flowchart exemplifying an operation of an electronic device according to an embodiment.
FIG. 6 is a flowchart exemplifying an operation of an electronic device according to an embodiment.
FIG. 7 is a flowchart exemplifying an operation of an electronic device according to an embodiment.
FIG. 8 is a flowchart exemplifying an operation of an electronic device according to an embodiment.
FIG. 9 is a flowchart exemplifying an operation of an electronic device according to an embodiment.
FIG. 10A is a flowchart exemplifying an operation of an electronic device according to an embodiment.
FIG. 10B illustrates an example of a screen displayed by an electronic device according to an embodiment.
FIG. 11 is a flowchart exemplifying an operation of an electronic device according to an embodiment.
FIG. 12 illustrates an example of a screen displayed by an electronic device according to an embodiment.
FIG. 13 illustrates an example of another electronic device according to an embodiment.
FIG. 14 illustrates an example of an electronic device according to an embodiment.
FIG. 15A illustrates an example of a screen displayed by an electronic device according to an embodiment.
FIG. 15B illustrates an example of a screen displayed by an electronic device according to an embodiment.
FIG. 16 illustrates an example of a screen displayed by an electronic device according to an embodiment.
FIG. 17 is a diagram illustrating a structure of a generative AI model of an electronic device according to an embodiment.
FIG. 18 is a flowchart illustrating an operation of an electronic device according to an embodiment.

### [Mode for Invention]

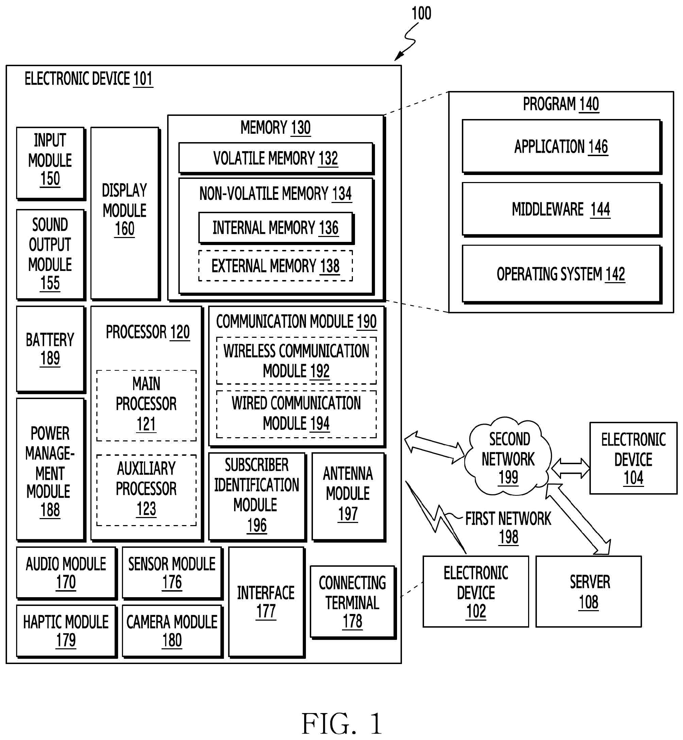

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

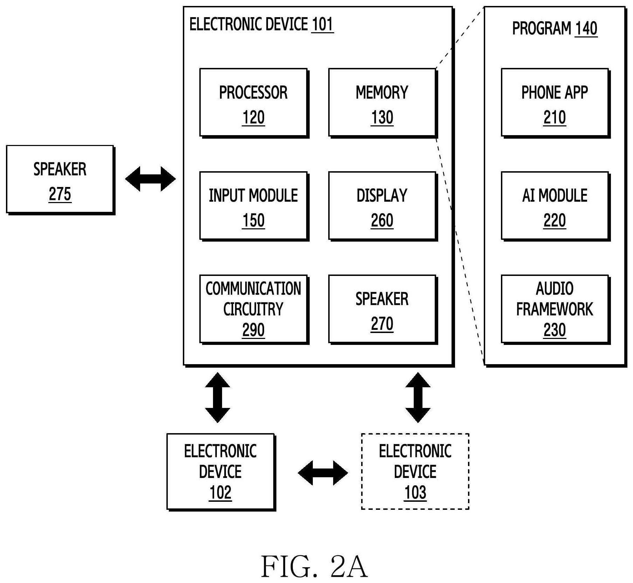

FIG. 2A is a block diagram of an electronic device according to an embodiment.

In an embodiment, an electronic device 101 of FIG. 2A may correspond to the electronic device 101 of FIG. 1. Referring to FIG. 2A, the electronic device 101 may include a processor 120, memory 130, an input module 150, a display 260, a speaker 270, and communication circuitry 290.

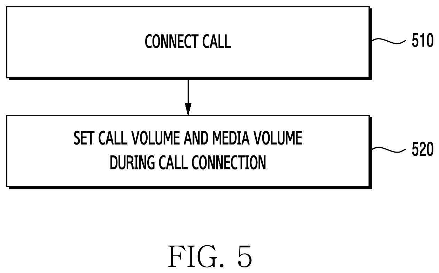

In an embodiment, the processor 120 may be used to execute operations of the electronic device 101 exemplified in descriptions of FIGS. 5 to 11. For example, the processor 120 may include at least a portion of the processor 120 of FIG. 1 or may correspond to the at least a portion of the processor 120 of FIG. 1. For example, the processor 120 may include one or more processors including an application processor (AP) and/or a communication processor (CP). For example, the processor 120 may be implemented as a single chip such as a system on chip (SoC) or may be implemented as a plurality of chips. For example, the processor 120 may be implemented as one integrated circuit or may be implemented as a plurality of integrated circuits. For example, the processor 120 may be arranged in a distributed manner within the electronic device 101.

In an embodiment, the memory 130 may (at least temporarily) store instructions for executing the operations of the electronic device 101 exemplified in the descriptions of FIGS. 5 to 11. The instructions may be executed by the processor 120. The instructions may be included in one or more programs 140 (e.g., a phone application (APP) 210, an artificial intelligence (AI) module 220, and an audio framework 230) stored in the memory 130. For example, the memory 130 may include at least a portion of the memory 130 (or at least a portion of the non-volatile memory 134) of FIG. 1 or correspond to the at least a portion of the memory 130 (or the at least a portion of the non-volatile memory 134) of FIG. 1. For example, the memory 130 may include a main memory (e.g., a random access memory (RAM)) in the electronic device 101, a register for the processor 120, a cache for the processor 120, a register for the communication circuitry 290, a buffer (or a soft buffer) for the communication circuitry 290, and/or an auxiliary memory (e.g., a hard disk drive (HDD) or a solid state drive (SDD)) of the electronic device 101. For example, the memory 130 may be implemented as a single chip or may be implemented as a plurality of chips. For example, the memory 130 may be implemented as one integrated circuit or may be implemented as a plurality of integrated circuits. For example, the memory 130 may be arranged in a distributed manner within the electronic device 101.

In an embodiment, the phone APP 210, the AI module 220, and the audio framework 230 may be executed by the processor 120. According to an embodiment, the AI module 220 may be included as a portion of the phone APP 210. However, it is not limited thereto. According to an embodiment, the AI module 220 may be a separate software module distinguished from the phone APP 210.

In an embodiment, the phone APP 210 may generate a screen for providing a user with a call function. In an embodiment, the phone APP 210 may display the screen through the display 260. In an embodiment, the screen of the phone APP 210 may include a screen for obtaining an input (e.g., a touch input to the phone APP 210) for establishing a connection (or a session) for a phone call between the electronic device 101 and another electronic device (e.g., electronic devices 102 and 103). In an embodiment, the screen of the phone APP 210 may include a screen for obtaining an input (e.g., an input through a keypad) of setting information for a call. In an embodiment, the screen of the phone APP 210 may include a visual object (or an image) (or an icon) (or a button) associated with at least one function (e.g., call assist, speech to text (STT), text to speech (TTS), or live translate) while a call is connected. In an embodiment, based on the live translate (and/or text call) being requested, the phone APP 210 may transmit, to the audio framework 230, a signal representing that the live translate is activated.

In an embodiment, based on the live translate (and/or the text call) being requested, the phone APP 210 may request the live translate to the AI module 220. In an embodiment, the phone APP 210 may record an audio signal obtained from the another electronic device 102 during a call. In an embodiment, based on the live translate (and/or the text call) being requested, the phone APP 210 may record an audio signal during a call. In an embodiment, the phone APP 210 may transmit the audio signal to the AI module 220. However, it is not limited thereto. For example, based on the live translate (and/or the text call) being requested, the phone APP 210 may transmit the audio signal (or data of an audio signal) obtained from the another electronic device 102 to the AI module 220 during a call.

In an embodiment, the AI module 220 may identify an utterance included in the audio signal. In an embodiment, the AI module 220 may convert the utterance included in the audio signal into text using an automatic speech recognition (ASR) model. In an embodiment, the AI module 220 may translate the utterance included in the audio signal. In an embodiment, the AI module 220 may translate the utterance included in the audio signal based on the request from the phone APP 210. In an embodiment, the AI module 220 may convert the translated utterance into an audio signal. In an embodiment, the AI module 220 may convert the translated utterance into the audio signal using a text to speech (TTS) model. In an embodiment, the AI module 220 may output the audio signal including the translated utterance through the speaker 270 and/or a speaker 275. In FIG. 2A, the AI module 220 has been illustrated as included in the electronic device 101, but it is merely an example. According to an embodiment, the AI module 220 may be included in an external server (e.g., the server 108 of FIG. 1) of the electronic device 101. For example, the AI module 220 may be stored in memory of the server. In this case, the electronic device 101 may transmit text extracted from the audio signal to the server through the communication circuitry (e.g., the communication module 190 of FIG. 1). Thereafter, the electronic device 101 may receive translated text information from the server through the communication circuitry. Additionally, in order to obtain the translated text information, the electronic device 101 may transmit the audio signal together with the text extracted from the audio signal to the server.

In an embodiment, the AI module 220 may perform a talkback on a conversation record displayed through the phone APP 210. In an embodiment, the talkback may include a function of converting the conversation record displayed through the phone APP 210 into an audio signal using the text to speech (TTS) model and outputting the audio signal through the speaker 270 and/or the speaker 275.

In an embodiment, the audio framework 230 may set an intensity (or a volume) of sound in which the audio signal obtained from the phone APP 210 and/or the AI module 220 is output. In an embodiment, the setting of the volume may be described with reference to FIGS. 5 to 11.

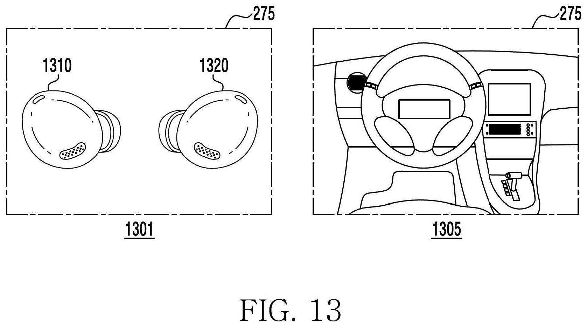

In an embodiment, the audio framework 230 may output the audio signal obtained from the phone APP 210 and/or the AI module 220 at a volume set through the speaker 270 and/or the speaker 275. In an embodiment, the speaker 270 and/or the speaker 275 may be referred to as an audio output device. In an embodiment, the speaker 270 may include a speaker of the sound output module 155 of FIG. 1 and a receiver of the sound output module 155 of FIG. 1. In an embodiment, the speaker 275 may be a device separate from the electronic device 101. In an embodiment, the speaker 275 may be an electronic device that may be connected to the electronic device 101 through a wired and/or wireless network. In an embodiment, the speaker 275 may be included in wireless earphones 1310 and 1320 exemplified through an identification numeral 1301 of FIG. 13. In an embodiment, the speaker 275 may be included in an infotainment system of a vehicle exemplified through an identification numeral 1305 of FIG. 13. However, it is not limited thereto. In an embodiment, the speaker 275 may be included in a sound bar, a wired earphone, a headset, an ear set, and/or a headphone.

In an embodiment, the audio framework 230 may output audio signals obtained from the phone APP 210 and/or the AI module 220, respectively. However, it is not limited thereto. In an embodiment, the audio framework 230 may synthesize and output the audio signals obtained from the phone APP 210 and/or the AI module 220 as one audio signal. In this case, in an embodiment, the audio framework 230 may set volumes of the audio signal obtained from the phone APP 210 and an audio signal obtained from another application (e.g., the AI module 220) other than the phone APP 210, and then synthesize the audio signals into one audio signal.

In an embodiment, the input module 150 may include at least two physical keys (e.g., buttons) for obtaining a user input. In an embodiment, a signal for requesting performance of a first function may be generated by a press (or push) on one of the at least two physical keys (e.g., the buttons). In an embodiment, a signal for requesting performance of a second function opposite to the first function may be generated by a press (or push) on another one of the at least two physical keys (e.g., the buttons). For example, the first function may be a function for increasing an intensity (or a volume) of sound through which an audio signal is output. For example, the second function may be a function for decreasing the intensity (or the volume) of the sound through which the audio signal is output. For example, the input module 150 may correspond to at least a portion of the input module 150 of FIG. 1. A key for obtaining a user input is not limited to the physical volume keys. For example, the input module 150 for obtaining a user input may include a button, a wheel, a side touch, or a pressure sensor. For example, the user input may be obtained through a user interface (UI) for controlling a volume on the display 260. For example, the user input may include various types of inputs. For example, the user input may include a voice, a motion (or a gesture), or a pattern (e.g., a touch pattern).

In an embodiment, the display 260 may display visual content. For example, the display 260 may include at least a portion of the display module 160 of FIG. 1 or may correspond to at least a portion of the display module 160 of FIG. 1.

In an embodiment, the speaker 270 may convert an audio signal (or an electrical signal) into sound. For example, the speaker 270 may correspond to at least a portion of the audio module 170 and/or the sound output module 155 of FIG. 1.

In an embodiment, the communication circuitry 290 may be used to support a phone call between the electronic device 101 and another electronic device (e.g., the electronic device 102). In an embodiment, the communication circuitry 290 may be used to support a one-to-one call phone call between the electronic device 101 and an electronic device (e.g., the electronic devices 102 and 103). In an embodiment, the communication circuitry 290 may be used to support a multilateral call (or a group call) between the electronic device 101 and a plurality of electronic devices (e.g., the electronic devices 102 and 103). For example, the communication circuitry 290 may include at least a portion of the communication module 190 (or the wireless communication module 192) of FIG. 1, or may correspond to at least a portion of the communication module 190 (or the wireless communication module 192) of FIG. 1. For example, the communication circuitry 290 may include communication circuitry for a long-distance communication network. For example, the communication circuitry 290 may be used to establish a communication link. For example, the communication circuitry 290 may be implemented as a single chip or may be implemented as a plurality of chips. For example, the communication circuitry 290 may be implemented as one integrated circuit or may be implemented as a plurality of integrated circuits. For example, the communication circuitry 290 may be arranged in a distributed manner within the electronic device 101.

In an embodiment, other electronic devices 102 and 103 may be a device for a call connection with the electronic device 101. For example, the other electronic devices 102 and 103 may include a portable communication device (e.g., a smartphone), a computer device, a portable multimedia device, a portable medical device, a camera, a wearable device, or a home appliance, which are capable of a call connection with the electronic device 101.

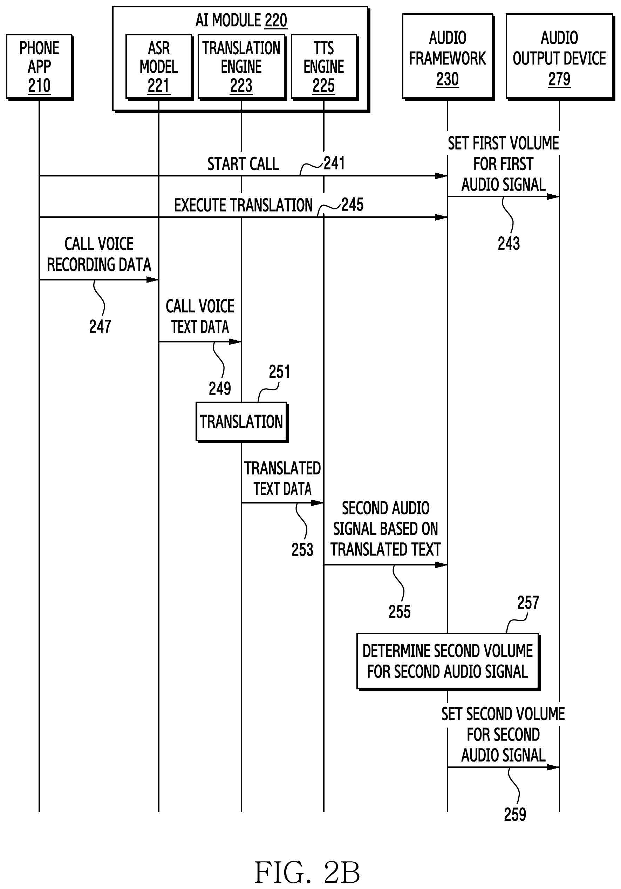

FIG. 2B is a flowchart exemplifying an operation of an electronic device according to an embodiment.

For description of FIG. 2B, FIGS. 1 and 2A may be referred to.

Referring to FIG. 2B, in operation 241, the phone APP 210 may notify the audio framework 230 that a call is started (or a call is received) (or a call is connected).

In operation 243, the audio framework 230 may set a volume of an audio output device 279 for a first audio signal obtained from the phone APP 210 to a first volume. In an embodiment, the audio output device 279 may include the speaker 270 and/or the speaker 275.

In operation 245, the phone APP 210 may notify the audio framework 230 that a translation is executed. Based on the live translate (and/or the text call) being requested, the phone APP 210 may notify the audio framework 230 that the translation is executed. Based on requesting the AI module 220 for the live translate, the phone APP 210 may notify the audio framework 230 that the translation is executed.

In operation 247, the phone APP 210 may transmit call voice recording data to an ASR model 221 of the AI module 220. In an embodiment, the call voice recording data may be data in which a first utterance included in the first audio signal is recorded. In an embodiment, based on the live translate (and/or the text call) being requested, the phone APP 210 may record an audio signal during a call. In an embodiment, the recorded audio signal during the call may be referred to as call voice recording data. In the operation 247, it is exemplified that the call voice recording data is provided to the AI module 220, but it is merely an example. For example, based on the live translate (and/or the text call) being requested, the phone APP 210 may transmit an audio signal (or data of the audio signal) obtained from the another electronic device 102 to the AI module 220 during a call.

In an embodiment, the ASR model 221 of the AI module 220 may identify an utterance included in the audio signal. The ASR model 221 may convert an utterance included in the first audio signal into text. In operation 249, the ASR model 221 may transmit call voice text data (or text converted from the utterance included in the audio signal) to a translation engine 223. In operation 251, the translation engine 223 may translate the text included in the audio signal. In operation 253, the translation engine 223 may transmit the translated text to a TTS engine 225. The TTS engine 225 may generate a second audio signal based on the translated text. In operation 255, the TTS engine 225 may transmit the second audio signal based on the translated text to the audio framework 230.

In operation 257, the audio framework 230 may determine a second volume for the second audio signal obtained from the TTS engine 225. In operation 259, the audio framework 230 may set a volume of the audio output device 279 for the second audio signal obtained from the TTS engine 225 to the second volume.

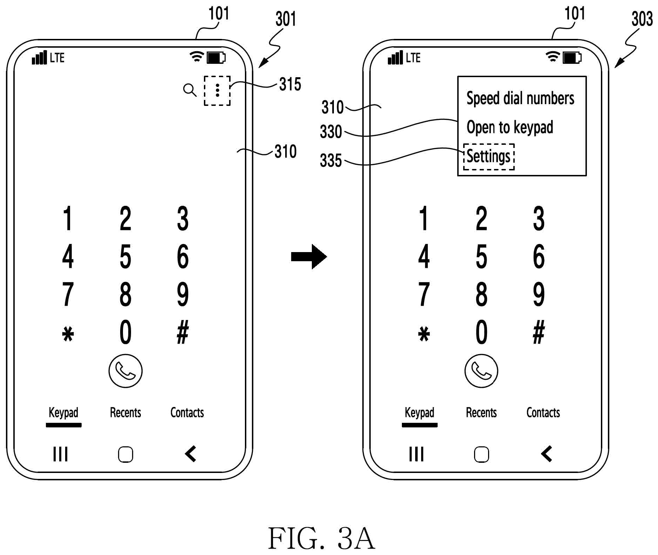

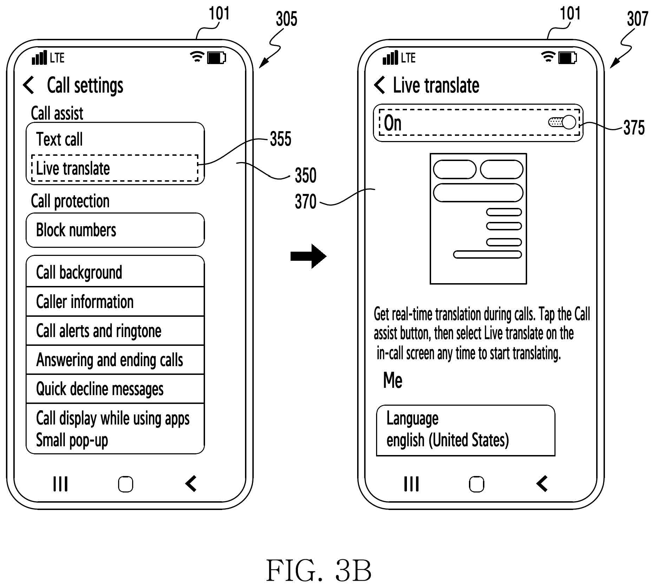

Hereinafter, an operation in which the electronic device 101 sets the live translate at a time point other than a call connection is described with reference to FIGS. 3A and 3B.

FIG. 3A illustrates an example of a screen displayed by an electronic device according to an embodiment. FIG. 3B illustrates an example of a screen displayed by an electronic device according to an embodiment.

For descriptions of FIGS. 3A and 3B, FIGS. 1, 2A, and 2B may be referred to. A reference numeral 301 of FIG. 3A may exemplify a screen 310 of a phone APP 210 displayed on a display 260. A reference numeral 303 of FIG. 3A may exemplify a menu 330 superimposed (or displayed) on the screen 310. A reference numeral 305 of FIG. 3B may exemplify a screen 350 of the phone APP 210 displayed on the display 260. A reference numeral 307 of FIG. 3B may exemplify a screen 370 of the phone APP 210 displayed on the display 260.

In an embodiment, an electronic device 101 may display the screen 310 on the display 260 based on the phone APP 210 being executed. In an embodiment, the screen 310 may be displayed on the display 260 based on a processor 120 executing the phone APP 210. In an embodiment, the screen 310 may include buttons (or visual objects) (or texts) (or images) (or a menu) (e.g., a keypad, recents, or contacts) for changing a tab displayed on the display 260. In an embodiment, the screen 310 may include a button (or a visual object) (or texts) (or an image) (or a menu) 315 associated with settings.

In an embodiment, the electronic device 101 may obtain a user input for the button 315 on the screen 310. In an embodiment, in response to the user input of selecting the button 315, the electronic device 101 may superimpose (or display) the menu (or a pop-up window) 330 on the screen 310. In an embodiment, the menu 330 may include speed dial numbers, open to keypad, or a button (or a visual object) (or texts) (or an image) (or a menu) associated with settings.

In an embodiment, the electronic device 101 may obtain a user input for a button 335 on the menu 330. In an embodiment, in response to the user input of selecting the button 335, the electronic device 101 may switch the screen 310. In an embodiment, in response to the user input of selecting the button 335, the electronic device 101 may switch to the screen 350 for call setting. In an embodiment, the screen 350 may include buttons (or visual objects) (or texts) (or images) (or a menu) (e.g., text call or live translate) for setting call assist. However, it is not limited thereto. In an embodiment, the screen 350 may include buttons for setting call protection and other buttons for call settings (e.g., call background, caller information, phone notification, and a ringtone).

In an embodiment, the electronic device 101 may obtain a user input for a button 355 on the screen 350. In an embodiment, in response to the user input of selecting the button 355, the electronic device 101 may display a screen 370 for setting the live translate on the display 260. In an embodiment, the screen 370 may include a button (or a visual object) (or text) (or an image) (or a menu) 375 for setting on/off of the live translate.

In an embodiment, the electronic device 101 may obtain a user input for the button 375. In an embodiment, in response to the user input of selecting the button 375, the electronic device 101 may activate or deactivate the live translate. In an embodiment, after the live translate is activated, the electronic device 101 may translate an utterance included in an audio signal obtained from another electronic device 102 based on a call connection being established.

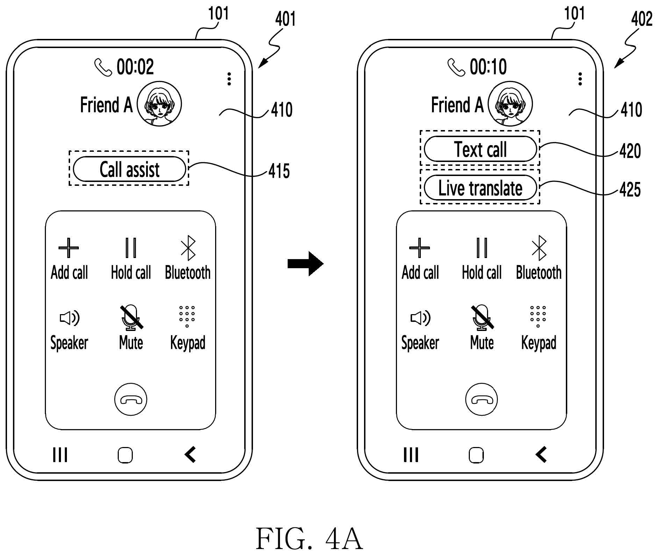

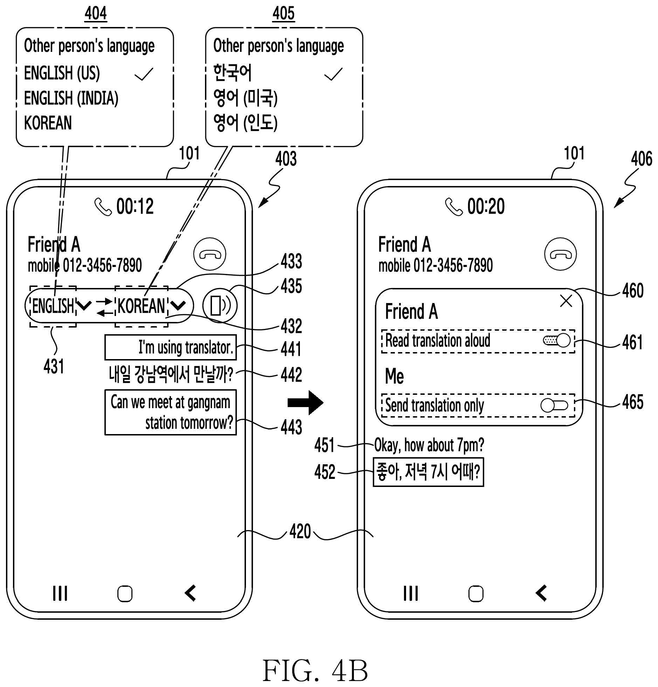

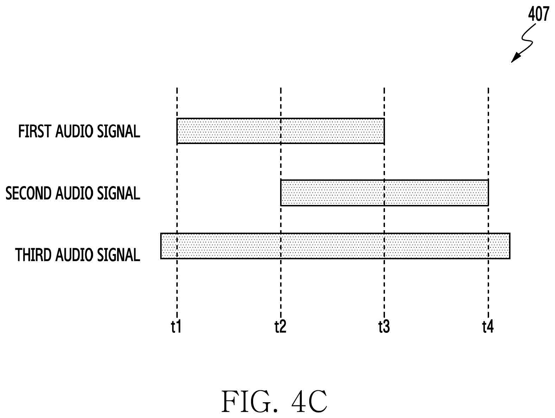

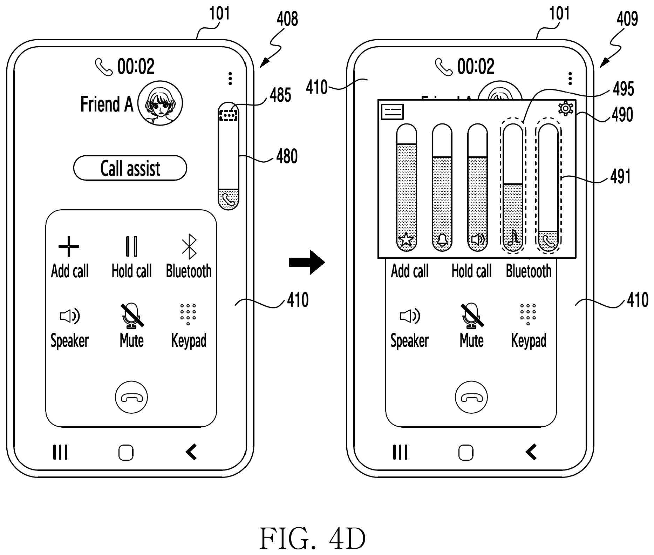

Hereinafter, an operation in which the electronic device 101 sets the live translate during a call connection is described with reference to FIGS. 4A, 4B, 4C, and 4D.

FIG. 4A illustrates an example of a screen displayed by an electronic device according to an embodiment. FIG. 4B illustrates an example of a screen displayed by an electronic device according to an embodiment. FIG. 4C is a diagram exemplifying a time overlap between audio signals output from an electronic device according to an embodiment. FIG. 4D illustrates an example of a screen displayed by an electronic device according to an embodiment.

For descriptions of FIGS. 4A, 4B, 4C, and 4D, FIGS. 1, 2A, 2B, 3A, and 3B may be referred to.

A reference numeral 401 of FIG. 4A may exemplify a screen 410 of a phone APP 210 displayed on a display 260. A reference numeral 402 of FIG. 4A may exemplify menus 420 and 425 displayed on the screen 410. A reference numeral 403 of FIG. 4B may exemplify a screen 430 of the phone APP 210 displayed on the display 260. A reference numeral 404 of FIG. 4B may exemplify a menu superimposed (or displayed) on the screen 430. A reference numeral 405 of FIG. 4B may exemplify a menu superimposed (or displayed) on the screen 430. A reference numeral 406 of FIG. 4B may exemplify a menu 460 superimposed (or displayed) on the screen 430. A reference numeral 407 of FIG. 4C may exemplify overlapping of audio signals output during a call connection. A reference numeral 408 of FIG. 4D may exemplify a menu 480 superimposed (or displayed) on the screen 410. A reference numeral 409 of FIG. 4D may exemplify a menu 490 superimposed (or displayed) on the screen 410.

In an embodiment, an electronic device 101 may display the screen 410 indicating that a call is connected to another electronic device 102 on the display 260. In an embodiment, the screen 410 may be displayed on the display 260 based on a processor 120 executing the phone APP 210. In an embodiment, the screen 410 may display information on a counterpart for which the call is connected. In an embodiment, the screen 410 may include a button (or a visual object) (or texts) (or an image) (or a menu) 415 for setting call assist during the call connection. However, it is not limited thereto. In an embodiment, the screen 410 may include buttons for executing various call functions (e.g., video call, Bluetooth, speaker, mute, and a keypad).

In an embodiment, the electronic device 101 may obtain a user input for the button 415. In an embodiment, in response to the user input of selecting the button 415, the electronic device 101 may superimpose (or display) buttons (or visual objects) (or texts) (or images) (or a menu) for text call or live translate on the screen 410.

In an embodiment, the electronic device 101 may obtain a user input for the button 425. In an embodiment, in response to the user input of selecting the button 425, the electronic device 101 may display the screen 430 displaying an utterance of a user of the electronic device 101 and an utterance of another user of the another electronic device 102 on the display 260. In an embodiment, the screen 430 may include buttons (or visual objects) (or texts) (or images) (or a menu) 431 and 432 for setting a translation language. In an embodiment, the screen 430 may include a button (or a visual object) (or texts) (or an image) (or a menu) 435 for additional setting associated with the live translate. In an embodiment, the screen 430 may include a conversation record based on the utterances of the user and the another user.

In an embodiment, the electronic device 101 may obtain a user input for the button 431. In an embodiment, in response to the user input of selecting the button 431, the electronic device 101 may superimpose (or display) the menu 404 for setting another language of the another user on the screen 430. In an embodiment, the electronic device 101 may obtain a user input for the button 432. In an embodiment, in response to the user input of selecting the button 432, the electronic device 101 may superimpose (or display) the menu 405 for setting a language of a user on the screen 430. In an embodiment, the live translate may be performed by an AI module 220 of the electronic device 101. In an embodiment, an utterance of the user obtained through a microphone (e.g., an input module 150 or an audio module 170) of the electronic device 101 by the live translate may be translated into another language of the another user. For example, an English text "I'm using translator" 441 may be displayed, indicating that the live translate is in use. For example, a Korean utterance of the user " 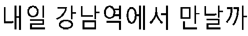 ?" 442, may be translated into an English text "Can we meet at Gangnam station tomorrow?" 443. In an embodiment, by the live translate, an utterance of the another user obtained through communication circuitry 290 of the electronic device 101 may be translated into a language of the user. For example, an English utterance of the another user "okay, how about 7pm?" may be translated into a Korean text " 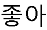 , 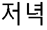 7 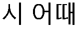 ?".

In an embodiment, the electronic device 101 may obtain a user input for the button 435. In an embodiment, in response to the user input of selecting the button 435, the electronic device 101 may superimpose (or display) the menu 460 including buttons (or visual objects) (or texts) (or images) (or a menu) 461 and 465 for additional setting associated with the live translate on the screen 430. It has been exemplified that only the buttons 461 and 465 for setting whether to output an utterance translated from an utterance of the another user and setting whether to transmit an utterance of the user are included in the menu 460. However, it is not limited thereto. For example, the menu 460 may include a button for setting whether to mute a first audio signal. For example, in a case that the first audio signal is muted, the utterance of the another user of the another electronic device 102 is not output from the electronic device 101, and a second audio signal may be output. For example, in the case that the first audio signal is muted, from among an audio signal for outputting an English utterance of the another user "okay, how about 7pm?" 451 and an audio signal for outputting a Korean text " 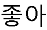 , 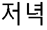 7 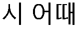 ?" 452, the electronic device 101 may output only the audio signal for outputting the Korean text " 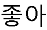 , 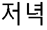 7 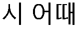 ?" 452 through a speaker 270 (or a speaker 275).

In an embodiment, the electronic device 101 may obtain a user input for the button 461. In an embodiment, in response to the user input of selecting the button 461, the electronic device 101 may set whether to output an utterance translated from an utterance of the another user. In an embodiment, while the output of the translated utterance is activated, the electronic device 101 may output the translated utterance of the another user through the speaker 270 or the speaker 275. In an embodiment, while the output of the translated utterance is deactivated, the electronic device 101 may not output the translated utterance of the another user through the speaker 270 or the speaker 275.

In an embodiment, the electronic device 101 may obtain a user input for the button 465. In an embodiment, in response to the user input of selecting the button 465, the electronic device 101 may set whether to transmit an utterance of the user. In an embodiment, while the button 465 is activated, the electronic device 101 may transmit only the translated utterance of the user to the another electronic device 102 through the communication circuitry 290, without transmitting an utterance of the user. For example, while the button 465 is activated, from among a Korean utterance of the user " 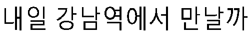 " and a translated English text "can we meet at Gangnam station tomorrow?", the electronic device 101 may transmit an audio signal for outputting the text "can we meet at Gangnam station tomorrow?" to the another electronic device 102. In an embodiment, while the button 465 is deactivated, the electronic device 101 may transmit an utterance of the user and a translated utterance of the user to the another electronic device 102 through the communication circuitry 290. For example, while the button 465 is deactivated, the electronic device 101 may transmit audio signals for outputting the Korean utterance of the user " 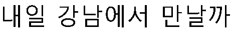 ?" and the translated English text "can we meet at Gangnam station tomorrow?" to the another electronic device 102. However, it is not limited thereto.

In an embodiment, in a case that a translated utterance of the another user is output through the speaker 270 or the speaker 275, an audio signal (hereinafter, a first audio signal) of the another user of the another electronic device 102, an audio signal (hereinafter, a second audio signal) including an utterance translated from an utterance included in the first audio signal, and/or an audio signal (hereinafter, a third audio signal) generated by another application being executed in the electronic device 101 may overlap (or, overlapping is probable). For example, referring to FIG. 4C, while the first audio signal is output during a section from a t1 to a t3, the second audio signal translated from the first audio signal may output during a section from the t2 to a t4. Accordingly, the first audio signal and the second audio signal may overlap (or, overlapping is probable) during a section from the t2 to the t3. In addition, according to a situation, in a case that the third audio signal is generated, the first audio signal and the second audio signal may not be clearly transmitted to the user by the third audio signal. Accordingly, in a case that the live translate is requested, the user may request that the second audio signal be heard louder.

In addition, according to a call environment, the user may desire to control a volume of the first audio signal, the second audio signal, and/or the third audio signal. For example, in a case that a call is important (or the call is in a concentrated state), the user may manipulate the input module 150 and/or the screen 410 on the display 260 to control the volume of the first audio signal or the second audio signal. Accordingly, the electronic device 101 may control the volume of the first audio signal, the second audio signal, and the volume of the third audio signal by an input for controlling the volume during a call connection. For example, the electronic device 101 may control the volume of the first audio signal, the second audio signal, and the volume of the third audio signal based on identifying a press (or push) for a physical key to control the volume. Referring to the reference numeral 408 of FIG. 4D, the electronic device 101 may display, on the display 260, a visual object (or a user interface (UI)) 480 indicating that the volume of the first audio signal is controlled based on identifying a press (or push) for a physical key for controlling the volume. In an embodiment, the user may selectively control the volume of the first audio signal, the second audio signal, or the volume of the third audio signal through an additional user input for a button (or a visual object) (or text) (or an image) (or a menu) 485 for additional volume setting on the visual object 480.

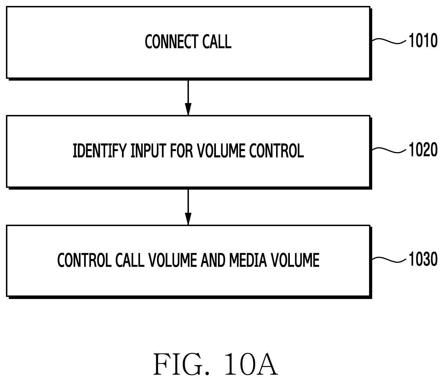

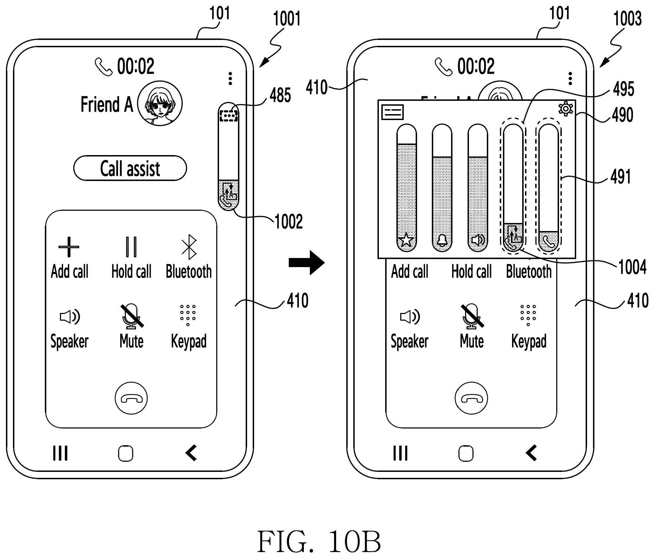

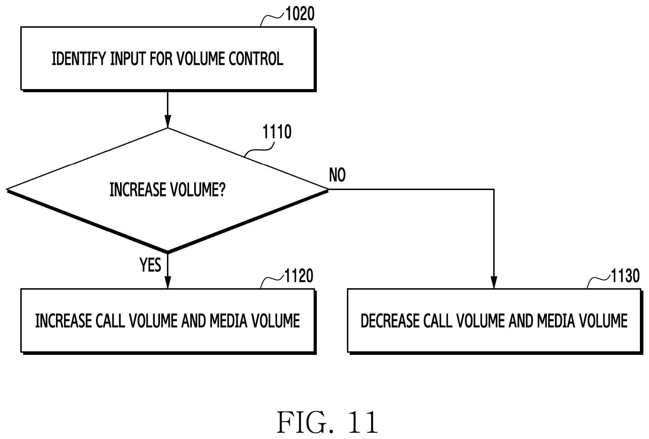

Hereinafter, an operation in which the electronic device 101 appropriately sets an intensity of an audio signal is described with reference to FIGS. 5 to 9. Hereinafter, an operation in which the electronic device 101 adjusts an intensity of audio signals desired by the user by one user input is described in detail with reference to FIGS. 10A, 10B, and 11.

FIG. 5 is a flowchart exemplifying an operation of an electronic device according to an embodiment.

For description of FIG. 5, FIGS. 1, 2A, 2B, 3A, 3B, 4A, 4B, 4C, and 4D may be referred to.

Operations of FIG. 5 may be performed by an electronic device 101. The operations of FIG. 5 may be performed by the electronic device 101 as a processor 120 of the electronic device 101 executes instructions stored in memory 130.

Referring to FIG. 5, in operation 510, the electronic device 101 may connect (or establish) a call. In an embodiment, based on accepting a call connection request from another electronic device 102, the electronic device 101 may connect (or establish) a call with the another electronic device 102. In an embodiment, based on transmitting a call connection request to the another electronic device 102, the electronic device 101 may connect (or establish) a call with the another electronic device 102.

In operation 520, the electronic device 101 may set (or identify) (or determine) a call volume and a media volume during a call connection. In an embodiment, the electronic device 101 may set a call volume (or an intensity) through which an audio signal (hereinafter, a first audio signal) of another user of the another electronic device 102 is output. In an embodiment, the electronic device 101 may set a media volume (or an intensity) through which other audio signals generated by one or more applications other than a phone APP 210 are output. For example, a portion of the another audio signals may be generated by an AI module 220. For example, the AI module 220 may generate an audio signal (hereinafter, a second audio signal) including an utterance translated from an utterance included in the first audio signal.

For example, a portion of the another audio signals may be generated by an application for a game. For example, a portion of the another audio signals may be generated by applications for multimedia playback (e.g., a video playback application, and/or a music playback application). For example, a portion of the another audio signals may be an audio signal for a notification and/or an alarm. For example, the audio signal for a notification and/or an alarm may be generated by a designated type of application (e.g., a map application or a navigation application). For example, a portion of the another audio signals may be the audio signal for a notification and/or an alarm. Hereinafter, audio signals, except for the first audio signal or the second audio signal generated (or output) during a call connection, may be referred to as a third audio signal.

In an embodiment, the electronic device 101 may set a volume of a first sound according to the first audio signal to be less than a volume of a second sound according to the second audio signal. For example, the volume of the second sound may be greater than the volume of the first sound by a designated offset (e.g., 2 dB) (or a designated step). For example, a relationship between the volume of the second sound and the volume of the first sound may be set as illustrated in Table 1 below.

**[Table 1]**

| | Volume step | | | | | | |
|---|---|---|---|---|---|---|---|
| First sound | 1 | 2 | 3 | ... | N-2 | N-1 | N |
| Second sound | M-N+1 | M-N+2 | M-N+3 | ... | M-2 | M-1 | M |

Referring to Table 1, a difference between the volume of the second sound and the volume of the first sound may be M-N. For example, during a call, in a case that an intensity of the volume of the first sound is in step 1, an intensity of the volume of the second sound may be in step M-N+1. For example, during a call, in a case that an intensity of the volume of the first sound is in step N, an intensity of the volume of the second sound may be in step M. However, it is not limited thereto. Herein, the N may be the number of steps by which an intensity of the first audio signal may be adjusted during a call. Herein, the M may be the number of steps by which an intensity of the second audio signal may be adjusted at a time point other than a call. Referring to Table 1, the number of steps for adjusting an intensity of the volume of the second sound during a call connection may be set equal to (or equal to or less than) the number of steps for adjusting an intensity of the volume of the first sound. For example, in a case that N is 8 and M is 15, a step difference in an intensity of the volume between the first sound and the second sound may be 7. For example, in a case that an intensity of the volume of the first sound is in step 1, an intensity of the volume of the second sound may be in step 8. For example, in a case that an intensity of the volume of the first sound is in step 8, an intensity of the volume of the second sound may be in step 15. However, it is not limited thereto.

In an embodiment, the electronic device 101 may change (or limit) the number of steps by which an intensity of the second sound may be adjusted during a call connection to the number of steps by which an intensity of the first sound may be adjusted. In an embodiment, a range of an intensity (or a range of a volume) of the second sound may be adjusted to N steps of entire steps (i.e., steps of M). For example, in a case that importance of the second sound is high, a range of an intensity of the second sound may be adjusted to have a range of 8 to 15 steps of 15 steps. For example, in a case that importance of the second sound is low, a range of an intensity of the second sound may be adjusted to have a range of 1 to 8 steps of 15 steps. For example, the importance of the second sound may be determined based on a priority. For example, the priority may be described with reference to Table 2 below. However, it is not limited thereto. According to an embodiment, in a case that a range of an intensity of the second sound is adjusted to 8, a range of an intensity of the second sound may be set to consecutive 8 steps (e.g., 1 to 8, 2 to 9, 3 to 10, ..., 6 to 13, 7 to 14, or 8 to 15) of 15 steps. However, it is not limited thereto. In a case that a range of an intensity of the second sound is adjusted to 8, a range of an intensity of the second sound may be configured with non-continuous 8 steps (e.g., 1, 3, 5, 7, 9, 11, 13, or 15 steps) of 15 steps. However, it is not limited thereto.

In an embodiment, the electronic device 101 may change a difference between a volume of the second sound and a volume of the first sound during a call. For example, the electronic device 101 may increase the difference during a time section in which an output of the second audio signal and an output of the first audio signal overlap (or, overlapping is probable). For example, the electronic device 101 may decrease an intensity of a volume in which the first audio signal is output during a time section in which output of the first audio signal and output of the second audio signal overlap (or, overlapping is probable) to be less than an intensity in a time section other than the time section. For example, the electronic device 101 may increase an intensity of a volume of the second sound and/or decrease an intensity of a volume of the first sound during the time section. However, it is not limited thereto.

In an embodiment, the electronic device 101 may set a volume of the first sound according to the first audio signal to be greater than a volume of a third sound according to the third audio signal. For example, the volume of the third sound may be less than the volume of the first sound by a designated offset (e.g., 2 dB) (or a designated step). For example, a difference between the volume of the first sound and the volume of the third sound may be identical to the difference between the volume of the second sound and the volume of the first sound. However, it is not limited thereto. For example, the difference between the volume of the first sound and the volume of the third sound may be greater than the difference between the volume of the second sound and the volume of the first sound.

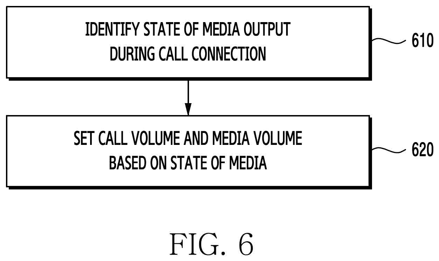

In an embodiment, the electronic device 101 may set a call volume and a media volume based on a state of media or attribute information of audio during a call connection. Hereinafter, the operation of setting a call volume and a media volume by the electronic device 101 based on the state of media or the attribute information of audio may be described with reference to FIG. 6.

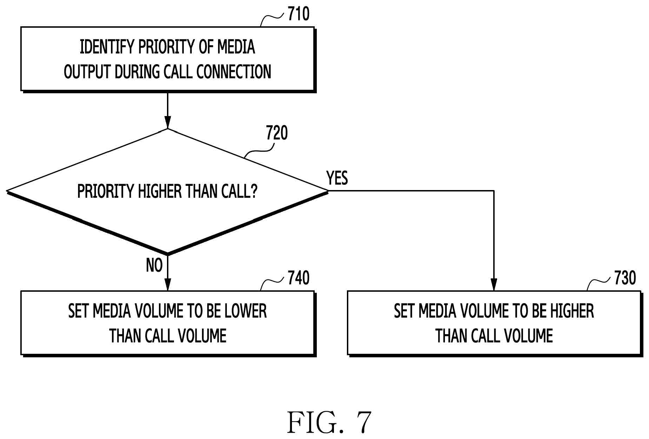

In an embodiment, the electronic device 101 may set a volume during a call connection, based on a priority of a call and/or media. Hereinafter, the operation of setting a call volume and a media volume by the electronic device 101 based on the priority of the call and/or the media may be described with reference to FIG. 7.

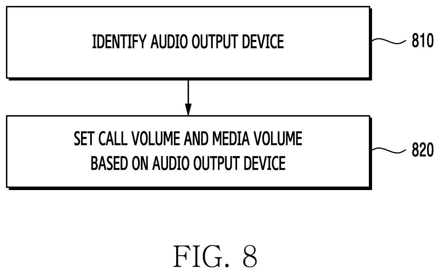

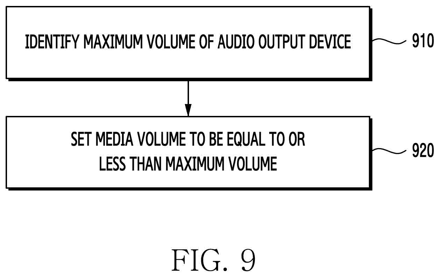

In an embodiment, the electronic device 101 may set a call volume and a media volume based on an audio output device from which an audio signal is output during a call connection. In an embodiment, the electronic device 101 may set a call volume and a media volume based on a maximum volume of an audio output device from which an audio signal is output during a call connection. Hereinafter, the operation of setting a call volume and a media volume by the electronic device 101 based on the audio output device may be described with reference to FIG. 8 or 9.

In an embodiment, the operations of FIG. 5 may be applied even when a call connection is a multilateral call connection. For example, the electronic device 101 may set a volume of a first audio signal obtained from the electronic device 102 and a volume of an audio signal obtained from an electronic device 103 to be identical. For example, the electronic device 101 may set a volume of a second audio signal with respect to the first audio signal obtained from the electronic device 102 and a volume of an audio signal including an utterance translated from an utterance included in the audio signal obtained from the electronic device 103 to be identical. However, it is not limited thereto. For example, the electronic device 101 may set a volume of a first audio signal obtained from the electronic device 102 and a volume of an audio signal obtained from the electronic device 103 differently. For example, the electronic device 101 may set a volume of a second audio signal with respect to the first audio signal obtained from the electronic device 102 and a volume of an audio signal including an utterance translated from an utterance included in the audio signal obtained from the electronic device 103 differently.

FIG. 6 is a flowchart exemplifying an operation of an electronic device according to an embodiment.

For description of FIG. 6, FIGS. 1, 2A, 2B, 3A, 3B, 4A, 4B, 4C, and 4D may be referred to.

Operations of FIG. 6 may be performed by an electronic device 101. The operations of FIG. 6 may be performed by the electronic device 101 as a processor 120 of the electronic device 101 executes instructions stored in memory 130.

Operations 610 and 620 of FIG. 6 may be included in the operation 520 of FIG. 5.

In the description of FIG. 6, a first audio signal may refer to an audio signal of another user obtained during a call connection with another electronic device 102. A second audio signal may refer to an audio signal including an utterance translated from an utterance included in the first audio signal. A third audio signal may refer to an audio signal, except for the first audio signal or the second audio signal.

Referring to FIG. 6, in the operation 610, the electronic device 101 may identify a state of media output during a call connection. In an embodiment, the media may include an application (or content played by the application) that generates a second audio signal and/or a third audio signal during a call connection. In an embodiment, the state of media may indicate whether an application generating the third audio signal is in a foreground (or background), whether a designated function is executed, and/or whether a user interaction occurs. For example, an application operating in the foreground may include that an execution screen of the application is displayed on a display 260. For example, an application operating in the background may include that a screen associated with execution of the application is not displayed on the display 260. For example, the designated function of an application may include a route guidance function through a designated type of application (e.g., a map application or a navigation application). For example, the user interaction for an application may include a touch input to an execution screen of the application. In an embodiment, the state of media may indicate whether an application provides a user interface (UI) (or a user experience (UX)). In an embodiment, the state of media may indicate a priority of a volume output by the application. In an embodiment, the state of media may indicate whether an application obtains focus. In an embodiment, the state of media may indicate whether an interaction of a user for an execution screen of an application exists (or a gaze is positioned). However, it is not limited thereto.

In the operation 620, the electronic device 101 may set a call volume and a media volume based on the state of media.

In an embodiment, the electronic device 101 may set a volume of the third audio signal generated by an application operating in the foreground to be greater than a volume of the first audio signal (by a designated offset (e.g., 2 dB)) (or a designated step). In an embodiment, the electronic device 101 may set a volume of the third audio signal generated by an application operating in the background to be less than a volume of the first audio signal (by the designated offset (e.g., 2 dB)) (or the designated step). For example, a volume of a third audio signal generated by an application (e.g., a game application, a video playback application, and/or a music playback application) may be set differently according to whether the application operates in the foreground or the background. For example, in a case that an application that generates a third audio signal is executed in the background during a phone connection, the electronic device 101 may set a volume of the third audio signal to be less than a volume of the first audio signal (by the designated offset (e.g., 2 dB)) (or the designated step). For example, in a case that an application that generates a third audio signal is executed in the foreground during a phone connection, the electronic device 101 may set a volume of the third audio signal higher than when it is executed in the background.

In an embodiment, the electronic device 101 may set a volume of a third audio signal generated by an application (e.g., a map application or a navigation application) that executes a designated function (e.g., route guidance) to be greater than a volume of the first audio signal (by the designated offset (e.g., 2 dB)) (or the designated step). In an embodiment, in a case that an application (e.g., a map application or a navigation application) provides a designated function (e.g., route guidance) to the user, the electronic device 101 may set a volume of the third audio signal to be greater than a volume of the first audio signal (by the designated offset (e.g., 2 dB)) (or the designated step) regardless of whether the application operates in the background or the foreground. In an embodiment, in a case that an application (e.g., a map application or a navigation application) does not provide a designated function (e.g., route guidance) to the user, the electronic device 101 may set a volume of the third audio signal to be lower than a volume of the first audio signal (by the designated offset (e.g., 2 dB)) (or the designated step) regardless of whether the application operates in the background or the foreground.

In an embodiment, the electronic device 101 may set a volume of a third audio signal generated by an application in which a user interaction occurs (e.g., an input is input) to be greater than a volume of the first audio signal (by the designated offset (e.g., 2 dB)) (or the designated step). In an embodiment, the electronic device 101 may set a volume of a third audio signal generated by an application in which a user interaction occurs among applications operating in the foreground to be greater than volumes of other third audio signals generated by other applications.

FIG. 7 is a flowchart exemplifying an operation of an electronic device according to an embodiment.

For description of FIG. 7, FIGS. 1, 2A, 2B, 3A, 3B, 4A, 4B, 4C, and 4D may be referred to.

Operations of FIG. 7 may be performed by an electronic device 101. The operations of FIG. 7 may be performed by the electronic device 101 as a processor 120 of the electronic device 101 executes instructions stored in memory 130.

Referring to FIG. 7, in operation 710, the electronic device 101 may identify a priority according to a type based on attribute information of an audio signal output during a call connection.

**[Table 2]**

| Priority | Type of audio signal | Offset |
|---|---|---|
| 1 | STREAM_ACCESSIBILITY | +2 dB |
| 1 | STREAM_ASSISTANT | +2 dB |
| 2 | STREAM_DTMF | 0 dB |
| 2 | STREAM_ALARM | 0 dB |
| 3 | STREAM_NOTIFICATION | -2 dB |
| 3 | STREAM_MUSIC | -2 dB |

Referring to Table 2, in a case that the type of an audio signal is STREAM_ACCESSIBILITY or STREAM_ASSISTANT, it may have a priority higher than a priority of a first audio signal. In a case that the type of an audio signal is STREAM_DTMF or STREAM_ALARM, it may have a priority identical to the priority of the first audio signal. In a case that the type of an audio signal is STREAM_NOTIFICATION or STREAM_MUSIC, it may have a priority lower than the priority of the first audio signal. In an embodiment, STREAM_ACCESSIBILITY may represent a portion (e.g., a talkback) of a second audio signal generated by an AI module 220. In an embodiment, STREAM_ASSISTANT may represent another portion (e.g., a call translation) of the second audio signal generated by the AI module 220. In an embodiment, STREAM_DTMF may represent a dial tone signal. In an embodiment, STREAM_ALARM may represent a third audio signal representing an alarm generated by an application. In an embodiment, STREAM_NOTIFICATION may represent a third audio signal representing a notification generated by an application. In an embodiment, STREAM_MUSIC may represent a third audio signal generated by playing music (or a video) (or background music) by an application.

In operation 720, the electronic device 101 may determine whether a priority of media has a priority higher than a call. The media may refer to other types of audio signals that may occur during a call. For example, the electronic device 101 may determine that a priority of a second audio signal generated by the AI module 220 is higher than a priority of a first audio signal. For example, the electronic device 101 may determine that a priority of a third audio signal generated by an application (e.g., a game application or a music application) other than the AI module 220 is lower than a priority of the first audio signal.

In the operation 720, in a case that the priority of media has a priority higher than a call, the electronic device 101 may perform operation 730. In the operation 720, in a case that the priority of media has a priority lower than a call, the electronic device 101 may perform operation 740.

In the operation 730, the electronic device 101 may set a media volume to be higher than a call volume. For example, the electronic device 101 may set a volume of the second audio signal to be higher than a volume of the first audio signal (by a designated offset (e.g., 2 dB)) (or a designated step).

For example, as illustrated in Table 1, in a case that an intensity of a volume of a first sound according to the first audio signal is in step 1, the electronic device 101 may set an intensity of a volume of a second sound according to the second audio signal to step M-N+1. For example, as illustrated in Table 1, in a case that an intensity of a volume of the first sound according to the first audio signal is in step N, the electronic device 101 may set an intensity of a volume of a second sound according to the second audio signal to step M.

In the operation 740, the electronic device 101 may set a media volume to be lower than a call volume. For example, the electronic device 101 may set a volume of the third audio signal to be lower than a volume of the first audio signal (by a designated offset (e.g., 2 dB)) (or a designated step). For example, the electronic device 101 may set a relationship between a volume

of a third sound and a volume of a first sound according to the third audio signal as illustrated in Table 3 below.

**[Table 3]**

| | Volume step | | | | | | |
|---|---|---|---|---|---|---|---|
| First sound | 1 | 2 | 3 | ... | N-2 | N-1 | N |
| Third sound | 0 | 1 | 2 | ... | N-3 | N-2 | N-1 |

Referring to Table 3, a difference between a volume of the first sound and a volume of the third sound may be 1. For example, during a call, in a case that an intensity of a volume of the first sound is in step 1, an intensity of a volume of the third sound may be in step 0. For example, during a call, in a case that an intensity of a volume of the first sound is in step N, an intensity of a volume of the third sound may be in step N-1. However, it is not limited thereto. Herein, the N may be the number of steps by which an intensity of the first audio signal may be adjusted during a call. Herein, the number of steps by which an intensity of the third audio signal may be adjusted during a time section other than a call connection may be N or more. Referring to Table 3, during a call connection, the number of steps by which an intensity of a volume of the third sound is adjusted may be set equal to (or equal to or less than) the number of steps by which an intensity of a volume of the first sound is adjusted.

FIG. 8 is a flowchart exemplifying an operation of an electronic device according to an embodiment.

For description of FIG. 8, FIGS. 1, 2A, 2B, 3A, 3B, 4A, 4B, 4C, and 4D may be referred to.

Operations of FIG. 8 may be performed by an electronic device 101. The operations of FIG. 8 may be performed by the electronic device 101 as a processor 120 of the electronic device 101 executes instructions stored in memory 130.

Referring to FIG. 8, in operation 810, the electronic device 101 may identify an audio output device. In an embodiment, the electronic device 101 may identify a speaker through which first to third audio signals are output. For example, the electronic device 101 may identify a speaker 270 through which the first to third audio signals are output among one or more speakers included in the electronic device 101. For example, the electronic device 101 may identify a speaker 275 connected to the electronic device 101 by wire and/or wirelessly.

In operation 820, the electronic device 101 may set a call volume and a media volume based on the audio output device. For example, in a case that the electronic device 101 outputs the first to third audio signals based on the speaker 275 wirelessly connected (e.g., connected through a Bluetooth network) to the electronic device 101, the electronic device 101 may set a volume of sounds according to the first to third audio signals to a maximum value. For example, the electronic device 101 may be set to change a self-volume of the speaker 275 by transmitting a volume setting event to the speaker 275 wirelessly connected (e.g., connected through a Bluetooth network) to the electronic device 101.

As described above, in a case that audio signals are output through the speaker 275 wirelessly connected (e.g., connected through a Bluetooth network) to the electronic device 101, a volume inside the electronic device 101 may be set to a maximum to resolve (or decrease) an overlap between a decrease in an intensity of the audio signal by the electronic device 101 and a decrease in an intensity of the audio signal by the speaker 275.

FIG. 9 is a flowchart exemplifying an operation of an electronic device according to an embodiment.

For description of FIG. 9, FIGS. 1, 2A, 2B, 3A, 3B, 4A, 4B, 4C, and 4D may be referred to.

Operations of FIG. 9 may be performed by an electronic device 101. The operations of FIG. 9 may be performed by the electronic device 101 as a processor 120 of the electronic device 101 executes instructions stored in memory 130.

Referring to FIG. 9, in operation 910, the electronic device 101 may identify a maximum volume of an audio output device. The maximum volume may be set differently for each audio output device. For example, a maximum volume of a speaker 270 included inside the electronic device 101 may be lower than a maximum volume of a speaker 275 wirelessly connected to the electronic device 101. In an embodiment, the maximum volume may be set to decrease that an audio signal obtained through a microphone provided in the audio output device is transmitted as an echo to another electronic device 102.

In operation 920, the electronic device 101 may set a media volume to be equal to or less than the maximum volume. For example, the electronic device 101 may set a volume of sounds according to first to third audio signals output based on the audio output device to be equal to or less than the maximum volume. For example, in a case that a volume of a second audio signal set to be higher than a volume of a first audio signal (by a designated offset (e.g., 2 dB)) (or a designated step) exceeds the maximum volume of the audio output device, the electronic device 101 may limit the volume of the second audio signal to the maximum volume. For example, the electronic device 101 may set a volume of the second audio signal as illustrated in Table 4 below in consideration of the maximum volume.

**[Table 4]**

| | Volume step | | | | | | |
|---|---|---|---|---|---|---|---|
| First sound | 1 | 2 | 3 | ... | N-2 | N-1 | N |
| Second sound | M-N+1 | M-N+2 | M-N+3 | ... | M-2 | M-1 | M |
| Maximum volume | M-2 | | | | | | |
| Adjusted second sound | M-N+1 | M-N+2 | M-N+3 | ... | M-2 | M-2 | M-2 |

Referring to Table 4, the maximum volume of the audio output device may be set to M-2. Accordingly, according to a difference (e.g., M-N) between a volume of the second sound and a volume of the first sound, a volume of the second audio signal may be limited to the maximum volume in volume steps (i.e., M-1 and M) exceeding M-2.

The electronic device 101 as described above may decrease an echo transmitted to the another electronic device 102 by controlling a volume of a plurality of audio signals to equal to or less than the maximum volume.

FIG. 10A is a flowchart exemplifying an operation of an electronic device according to an embodiment. FIG. 10B illustrates an example of a screen displayed by an electronic device according to an embodiment.

For descriptions of FIGS. 10A and 10B, FIGS. 1, 2A, 2B, 3A, 3B, 4A, 4B, 4C, and 4D may be referred to.

Operations of FIG. 10A may be performed by an electronic device 101. The operations of FIG. 10A may be performed by the electronic device 101 as a processor 120 of the electronic device 101 executes instructions stored in memory 130. A reference numeral 1001 of FIG. 10B may exemplify a menu 1002 superimposed (or displayed) on a screen 410. A reference numeral 1003 of FIG. 10B may exemplify a menu 490 superimposed (or displayed) on the screen 410.

Referring to FIG. 10A, in operation 1010, the electronic device 101 may connect (or establish) a call. In an embodiment, based on accepting a call connection request from another electronic device 102, the electronic device 101 may connect (or establish) a call with the another electronic device 102. In an embodiment, based on transmitting a call connection request to the another electronic device 102, the electronic device 101 may connect (or establish) a call with the another electronic device 102.

In operation 1020, the electronic device 101 may identify an input for volume control. For example, the input for volume control may include a press (or push) for an input module 150. However, it is not limited thereto. For example, the input for volume control may include a touch input to a menu for controlling a volume of a first audio signal.

Referring to the reference numeral 1001 of FIG. 10B, the electronic device 101 may display, on a display 260, a visual object (or a UI) 1002 indicating that a volume of the first audio signal and a volume of a second audio signal are controlled based on identifying a press (or push) for a physical key for controlling a volume. In an embodiment, the visual object (or the UI) 1002 may include an icon indicating that a call volume is controlled and an icon indicating that a translation volume is controlled.

Referring to the reference numeral 1003 of FIG. 10B, the electronic device 101 may display a visual object 491 for controlling a volume of the first audio signal and a visual object 1004 for controlling a volume of the second audio signal on the display 260 on the menu 490 displayed by an additional user input. In an embodiment, the visual object 1004 may include the icon indicating that a translation volume is controlled. In an embodiment, the visual object 491 may include the icon indicating that a call volume is controlled.

In operation 1030, the electronic device 101 may control a call volume and a media volume. The electronic device 101 may control a volume of the first audio signal and the second audio signal based on the input for volume control. The electronic device 101 may control volumes of first to third audio signals based on the input for volume control.

In an embodiment, the electronic device 101 may control a volume of the first audio signal and the second audio signal at different intervals based on the input for volume control. For example, the electronic device 101 may control a volume of the first audio signal by one of N steps based on the input for volume control. For example, the electronic device 101 may control a volume of the second audio signal by one of M steps based on the input for volume control. In an embodiment, the N may be 8 and the M may be 15. However, it is not limited thereto. In an embodiment, the electronic device 101 may change displays 1004 and 491 of the visual objects such that a width by which the visual object 491 is increased is greater than a width by which the visual object 1004 is increased, based on the input for volume control. However, it is not limited thereto. In an embodiment, the electronic device 101 may change the displays 1004 and 491 of the visual objects such that a width by which the visual object 491 is increased is smaller than a width by which the visual object 1004 is increased, based on the input for volume control.

The operations 1020 and 1030 of FIG. 10A may be performed in the electronic device 101 based on the electronic device 101 obtaining an input for volume control before a call connection after requesting a call to the another electronic device 102. The operations 1020 and 1030 of FIG. 10A may be performed in the electronic device 101 based on the another electronic device 102 obtaining an input for volume control before a call connection after requesting a call to the electronic device 101.

The electronic device 101 as described above may increase convenience of a user by controlling a volume of a plurality of audio signals with one input.

FIG. 11 is a flowchart exemplifying an operation of an electronic device according to an embodiment.

For description of FIG. 11, FIGS. 1, 2A, 2B, 3A, 3B, 4A, 4B, 4C, and 4D may be referred to.

Operations of FIG. 11 may be performed by an electronic device 101. The operations of FIG. 11 may be performed by the electronic device 101 as a processor 120 of the electronic device 101 executes instructions stored in memory 130.

Operations 1110, 1120, and 1130 of FIG. 11 may be included in the operation 1030 of FIG. 10A.

Referring to FIG. 11, in operation 1020, the electronic device 101 may identify an input for volume control. For example, the input for volume control may include a press (or push) for an input module 150. However, it is not limited thereto. For example, the input for volume control may include a touch input to a menu 480 for controlling a volume of a first audio signal.

In the operation 1110, the electronic device 101 may determine whether the input for volume control is an input for increasing the volume. For example, the electronic device 101 may determine that the input for volume control is an input for increasing the volume based on a press (or push) for a first physical button of the input module 150. For example, the electronic device 101 may determine that the input for volume control is an input for decreasing the volume based on a press (or push) for a second physical button distinguished from the first physical button of the input module 150. However, it is not limited thereto. For example, the electronic device 101 may determine that the input for volume control is an input for increasing the volume based on a drag input in a first direction for the menu 480. For example, the electronic device 101 may determine that the input for volume control is an input for decreasing the volume based on a drag input in a second direction opposite to the first direction for the menu 480.

In the operation 1120, the electronic device 101 may increase a call volume and a media volume. The electronic device 101 may increase volumes of the first audio signal and a second audio signal by a step according to an input. The electronic device 101 may increase the volumes of the first audio signal and the second audio signal by an offset according to an input.

In an embodiment, in a case that the increased volume of the first audio signal or the second audio signal exceeds a maximum volume of an audio output device, the electronic device 101 may limit the increased volume to the maximum volume.

In the operation 1130, the electronic device 101 may decrease a call volume and a media volume. The electronic device 101 may decrease the volumes of the first audio signal and the second audio signal by a step according to an input. The electronic device 101 may decrease the volumes of the first audio signal and the second audio signal by an offset according to an input.

In an embodiment, in a case that the decreased volume of the first audio signal or the second audio signal is a minimum volume, the electronic device 101 may mute the first audio signal or the second audio signal.

In an embodiment, the operations of FIG. 11 may be applied even when a call connection is a multilateral call connection. For example, the electronic device 101 may increase or decrease a volume of the first audio signal obtained from the electronic device 102 and a volume of an audio signal obtained from an electronic device 103 based on the input for volume control. For example, the electronic device 101 may increase or decrease a volume of the second audio signal associated with the electronic device 102 and a volume of an audio signal including an utterance translated from an utterance included in the audio signal obtained from the electronic device 103 based on the input for volume control.

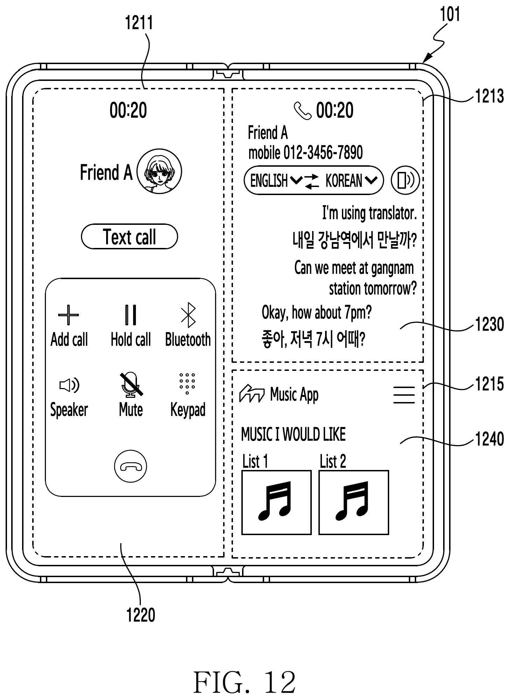

FIG. 12 illustrates an example of a screen displayed by an electronic device according to an embodiment.

For description of FIG. 12, FIGS. 1, 2A, 2B, 3A, 3B, 4A, 4B, 4C, and 4D may be referred to.

In the description of FIG. 12, a first audio signal may refer to an audio signal of another user obtained during a call connection with another electronic device 102. A second audio signal may refer to an audio signal including an utterance translated from an utterance included in the first audio signal. A third audio signal may refer to an audio signal, except for the first audio signal or the second audio signal.

Referring to FIG. 12, a plurality of regions 1211, 1213, and 1215 set on a display 260 of an electronic device 101 during a call are exemplified. The electronic device 101 of FIG. 12 may include a large-screen display or a flexible (e.g., foldable or rollable) display.

In an embodiment, the electronic device 101 may display screens 1220 and 1230 of a phone APP 210 in at least one region 1211 or 1213 of the plurality of regions 1211, 1213, and 1215 during a call. In an embodiment, the electronic device 101 may display a screen 1240 of another application (e.g., a music application) other than the phone APP 210 in at least one region 1215 of the plurality of regions 1211, 1213, and 1215 during a call.

In an embodiment, the electronic device 101 may control a volume of the first audio signal, a volume of the second audio signal, and a volume of the third audio signal based on a priority between the first audio signal, the second audio signal, or the third audio signal during a call. In an embodiment, the electronic device 101 may control a volume of the first audio signal, a volume of the second audio signal, and a volume of the third audio signal based on a priority between the first audio signal, the second audio signal, or the third audio signal while the third audio signal is output by the another application (e.g., the music application) during a call. In an embodiment, the operations of FIGS. 5 to 11 may be referred to for the control of a volume of the first audio signal, a volume of the second audio signal, and a volume of the third audio signal.

In an embodiment, the electronic device 101 may obtain an input for adjusting an intensity of a volume of the first audio signal during a call. In an embodiment, the electronic device 101 may obtain an input for adjusting an intensity of a volume of the first audio signal while the third audio signal is output by the another application (e.g., the music application) during a call.

In an embodiment, the electronic device 101 may control a volume of the first audio signal and a volume of the second audio signal based on the input for adjusting an intensity of a volume of the first audio signal. In an embodiment, the electronic device 101 may control a volume of the first audio signal, a volume of the second audio signal, and a volume of the third audio signal based on the input for adjusting an intensity of a volume of the first audio signal. In an embodiment, the electronic device 101 may control a volume based on a maximum volume set for an audio output device (e.g., a speaker 270 or a speaker 275). For example, the electronic device 101 may control a volume of the first audio signal, a volume of the second audio signal, or a volume of the third audio signal to be equal to or less than a maximum volume of the first audio signal, the second audio signal, or the third audio signal set for the audio output device (e.g., the speaker 270 and the speaker 275).

The electronic device 101 as described above may increase convenience of a user by controlling a volume of a plurality of audio signals with one input. In addition, the electronic device 101 as described above may decrease an echo transmitted to the another electronic device 102 by controlling a volume of the plurality of audio signals to be equal to or less than the maximum volume.

FIG. 13 illustrates an example of another electronic device according to an embodiment.

For description of FIG. 13, FIGS. 1, 2A, 2B, 3A, 3B, 4A,4B, 4C, and 4D may be referred to.

In the description of FIG. 13, a first audio signal may refer to an audio signal of another user obtained during a call connection with another electronic device 102. A second audio signal may refer to an audio signal including an utterance translated from an utterance included in the first audio signal. A third audio signal may refer to an audio signal, except for the first audio signal or the second audio signal.

Reference numerals 1301 and 1305 of FIG. 13 may indicate an audio output device (e.g., a speaker 275). For example, referring to the reference numeral 1301, the audio output device (e.g., the speaker 275) may be an electronic device (e.g., an earphone, an earbud, or a headphone) 1310 or 1320 that is wearable on an ear of a user. However, it is not limited thereto. For example, referring to the reference numeral 1305, the audio output device (e.g., the speaker 275) may be an infotainment system of a vehicle in which the user may ride.

In an embodiment, an electronic device 101 may output a first audio signal, a second audio signal, or a third audio signal through the audio output device (e.g., the speaker 275) during a call.

In an embodiment, the electronic device 101 may control a volume of the first audio signal, a volume of the second audio signal, and a volume of the third audio signal based on a priority between the first audio signal, the second audio signal, or the third audio signal during a call. In an embodiment, the electronic device 101 may control a volume of the first audio signal, a volume of the second audio signal, and a volume of the third audio signal based on the priority between the first audio signal, the second audio signal, or the third audio signal while the third audio signal is output by another application (e.g., a navigation application) during a call. In an embodiment, the operations of FIGS. 5 to 11 may be referred to for the control of a volume of the first audio signal, a volume of the second audio signal, and a volume of the third audio signal.

In an embodiment, the electronic device 101 may obtain an input for adjusting an intensity of a volume of the first audio signal during a call. In an embodiment, the input for adjusting an intensity of a volume of the first audio signal may include a direct input to the electronic device 101 (e.g., a touch input on a display 260 or a press input to an input module 150. In an embodiment, the input for adjusting an intensity of a volume of the first audio signal may include an indirect input to the electronic device 101 (e.g., a direct input to the audio output device (e.g., the speaker 275)).

In an embodiment, the electronic device 101 may control a volume of the first audio signal and a volume of the second audio signal based on the input for adjusting an intensity of a volume of the first audio signal. In an embodiment, the electronic device 101 may control a volume of the first audio signal, a volume of the second audio signal, and a volume of the third audio signal based on the input for adjusting an intensity of a volume of the first audio signal. In an embodiment, the electronic device 101 may control the volume based on a maximum volume set for the audio output device (e.g., a speaker 270 or the speaker 275). For example, the electronic device 101 may control a volume of the first audio signal, a volume of the second audio signal, or a volume of the third audio signal to be equal to or less than a maximum volume of the first audio signal, the second audio signal, or the third audio signal set for the audio output device (e.g., the speaker 275).

The electronic device 101 as described above may increase convenience of the user by controlling a volume of the plurality of audio signals with one input. In addition, the electronic device 101 as described above may decrease an echo transmitted to the another electronic device 102 by controlling a volume of the plurality of audio signals to be equal to or less than a maximum volume.

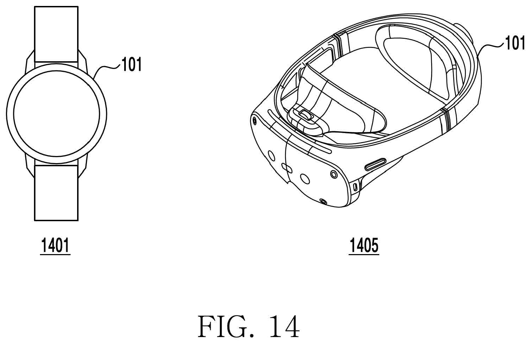

FIG. 14 illustrates an example of an electronic device according to an embodiment.

For description of FIG. 14, FIGS. 1, 2A, 2B, 3A, 3B, 4A, 4B, 4C, and 4D may be referred to.

In the description of FIG. 14, a first audio signal may refer to an audio signal of another user obtained during a call connection with another electronic device 102. A second audio signal may refer to an audio signal including an utterance translated from an utterance included in the first audio signal. A third audio signal may refer to an audio signal, except for the first audio signal or the second audio signal.

Reference numerals 1401 and 1405 of FIG. 14 may indicate a wearable device in which an electronic device 101 is worn on a part of a body of a user. For example, referring to the reference numeral 1401, the electronic device 101 may be an electronic device (e.g., a smart watch) that is wearable on a hand of the user. However, it is not limited thereto. For example, referring to the reference numeral 1405, the electronic device 101 may be a wearable device (e.g., a head mounted display (HMD)) that is wearable on a face of the user. In an embodiment, the wearable device that is wearable on a face of the user may provide the user with augmented reality (AR), virtual reality (VR), or mixed reality (MR) in which the augmented reality and the virtual reality are mixed.

In an embodiment, the electronic device 101 may control a volume of the first audio signal, a volume of the second audio signal, and a volume of the third audio signal based on a priority between the first audio signal, the second audio signal, or the third audio signal during a call. In an embodiment, the electronic device 101 may control a volume of the first audio signal, a volume of the second audio signal, and a volume of the third audio signal based on the priority between the first audio signal, the second audio signal, or the third audio signal while the third audio signal is output by another application (e.g., a music application) during a call. In an embodiment, the operations of FIGS. 5 to 11 may be referred to for the control of a volume of the first audio signal, a volume of the second audio signal, and a volume of the third audio signal.

In an embodiment, the electronic device 101 may obtain an input for adjusting an intensity of a volume of the first audio signal during a call. In an embodiment, the input for adjusting an intensity of a volume of the first audio signal may include a gesture (e.g., a hand gesture) and/or a touch input. In an embodiment, the input for adjusting an intensity of a volume of the first audio signal may include a button input to a controller linked with the electronic device 101.

In an embodiment, the electronic device 101 may control a volume of the first audio signal and a volume of the second audio signal based on the input for adjusting an intensity of a volume of the first audio signal. In an embodiment, the electronic device 101 may control a volume of the first audio signal, a volume of the second audio signal, and a volume of the third audio signal based on the input for adjusting an intensity of a volume of the first audio signal. In an embodiment, the electronic device 101 may control the volume based on a maximum volume set for an audio output device (e.g., a speaker 270 or a speaker 275). For example, the electronic device 101 may control a volume of the first audio signal, a volume of the second audio signal, or a volume of the third audio signal to be equal to or less than a maximum volume of the first audio signal, the second audio signal, or the third audio signal set for the audio output device (e.g., the speaker 270 or the speaker 275).

The electronic device 101 as described above may increase convenience of the user by controlling a volume of the plurality of audio signals with one input. In addition, the electronic device 101 as described above may decrease an echo transmitted to the another electronic device 102 by controlling a volume of the plurality of audio signals to be equal to or less than a maximum volume.

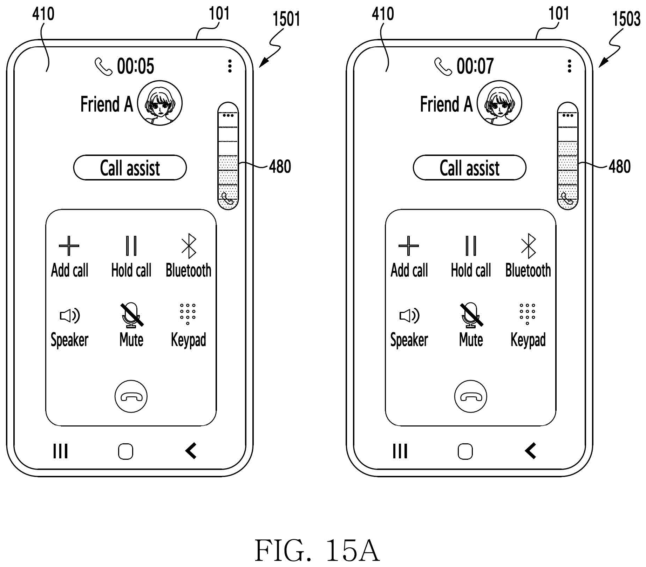

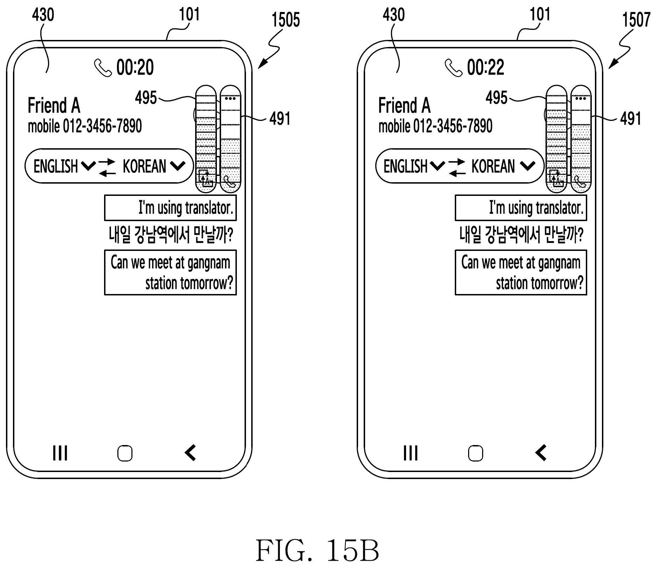

FIG. 15A illustrates an example of a screen displayed by an electronic device according to an embodiment. FIG. 15B illustrates an example of a screen displayed by an electronic device according to an embodiment.

In an embodiment, an electronic device 101 may receive a first audio signal from a first application (e.g., a phone APP) using the communication circuitry 290. A path for receiving the first audio signal from the first application (e.g., the phone APP) using the communication circuitry 290 may be referred to as a first sound path. For example, the first sound path may be a path through which a calling voice (or first audio) of a counterpart is obtained through the communication circuitry 290. For example, the first audio signal may be a voice call stream type audio signal. For example, the first sound path may be a path that receives a first audio signal from a first function (e.g., a call function) of any application (e.g., the phone APP).

In an embodiment, the electronic device 101 may receive a first volume control input while playing the first audio signal through the speaker 270 or 275. For example, the electronic device 101 may receive the first volume control input through an input module 150.

In an embodiment, the electronic device 101 may control a volume of the first audio signal within a first volume range based on receiving the first volume control input. For example, the first volume range may be described with reference to Table 5 below.

**[Table 5]**

| Step | 1 | 2 | 3 | 4 | 5 | 6 | 7 | 8 |
|---|---|---|---|---|---|---|---|---|
| Output | 51 | 58 | 65 | 72 | 79 | 86 | 93 | 100 |

Referring to Table 5, the electronic device 101 may increase the volume step by 1 based on the first volume control input for increasing a volume. For example, in a case that the volume step is 4, the electronic device 101 may change the volume step to 5 based on the first volume control input for increasing a volume. Accordingly, the first audio signal may be output through the speaker 270 or 275 at a volume having a size corresponding to 79% (79% of a maximum volume).

For example, referring to FIG. 15A, a reference numeral 1501 may exemplify a situation in which the electronic device 101 plays the first audio signal through the speaker 270 or 275 in a state that only the first application is activated. For example, the reference numeral 1501 may display a menu 480 indicating the volume step on a screen 410 as the electronic device 101 obtains the first volume control input.

For example, the reference numeral 1501 may exemplify a situation in which the volume step is 4. The electronic device 101 may change the volume step to 5 based on the first volume control input for increasing a volume. Accordingly, referring to a reference numeral 1503, the volume step may be changed from 4 to 5.

In an embodiment, based on obtaining a second audio signal from a second application (e.g., an AI module 220) while playing the first audio signal, the electronic device 101 may play the second audio signal through the speaker 270 or 275 together with the first audio signal. A path for receiving the second audio signal from the second application (e.g., the AI module 220) may be referred to as a second sound path. For example, the second sound path may be a path through which a voice (or a second audio) translated from a TTS engine 225 is generated. In an embodiment, the first sound path and the second sound path may be a software signal path. For example, the second audio signal may be a music stream type or an accessibility stream type audio signal. For example, the second sound path may be a path that receives a second audio signal from a second function (e.g., a translation function) of any application (e.g., the phone APP). According to an embodiment, the first sound path and the second sound path may be a path through which an audio signal generated by different functions of an identical application is transmitted. However, it is not limited thereto.

In an embodiment, the electronic device 101 may receive a second volume control input while playing the first audio signal and the second audio signal through the speaker 270 or 275. For example, the electronic device 101 may receive the second volume control input through the input module 150.

In an embodiment, the electronic device 101 may control a volume of the first audio signal within a second volume range and control a volume of the second audio signal within a third volume range based on receiving the second volume control input. An upper limit value and a lower limit value of the second volume range may be determined (or changed) based on a relationship between a first priority of the first audio signal and a second priority of the second audio signal. For example, in a case that the first priority is equal to or greater than the second priority, the second volume range may have a volume range illustrated in Table 5. For example, in a case that the first priority is less than the second priority, the second volume range may have a volume range illustrated in Table 6 below.

**[Table 6]**

| Step | 1 | 2 | 3 | 4 | 5 | 6 | 7 | 8 |
|---|---|---|---|---|---|---|---|---|
| Output | 44 | 51 | 58 | 65 | 72 | 79 | 86 | 93 |

Referring to Table 6, in a case that the first priority is less than the second priority, a volume of the first audio signal of the electronic device 101 may be set to have an output of a volume one step lower than an identical volume step in Table 5. The electronic device 101 may increase the volume step by 1 based on the second volume control input for increasing a volume. For example, in a case that the volume step is 4, the electronic device 101 may change the volume step to 5 based on the second volume control input for increasing a volume. Accordingly, the first audio signal may output through the speaker 270 or 275 at a volume having a size corresponding to 72% (72% of a maximum volume).

An upper limit value and a lower limit value of the third volume range may be determined (or changed) based on the relationship between the first priority of the first audio signal and the second priority of the second audio signal. For example, in a case that the second priority is lower than the first priority, the third volume range may have a volume range illustrated in Table 7 below. For example, in a case that the second priority is identical to the first priority, the third volume range may have a volume range illustrated in Table 8 below. For example, in a case that the second priority is higher than the first priority, the third volume range may have a volume range illustrated in Table 9 or Table 10 below.

**[Table 7]**

| Step | 1 | 2 | 3 | 4 | 5 | 6 | 7 | 8 |
|---|---|---|---|---|---|---|---|---|
| Output | 44 | 48 | 52 | 56 | 60 | 64 | 68 | 72 |

Referring to Table 7, in a case that the second priority is lower than the first priority (e.g., in a case that the second audio signal is a notification signal and/or a music playback signal), a volume of the second audio signal of the electronic device 101 may be set to have a range of the first 8 steps of 15 steps according to a media volume table.

**[Table 8]**

| Step | 3 | 4 | 6 | 8 | 10 | 11 | 13 | 15 |
|---|---|---|---|---|---|---|---|---|
| Output | 52 | 56 | 64 | 72 | 80 | 84 | 92 | 100 |

Referring to Table 8, in a case that the second priority is identical to the first priority (e.g., in a case that the second audio signal is an alarm signal), a volume of the second audio signal of the electronic device 101 may be set to become a level equivalent to an output intensity of the first audio signal for each volume step among the 15 steps according to the media volume table. However, it is not limited thereto. For example, in a case that the second priority is identical to the first priority, a volume of the second audio signal of the electronic device 101 may be set to have a volume range according to the Table 5. For example, in a case that the second priority is identical to the first priority, a volume of the second audio signal of the electronic device 101 may be set to have a range of 3 to 15 steps among the 15 steps according to the media volume table.

**[Table 9]**

| Step | 8 | 9 | 10 | 11 | 12 | 12 | 12 | 12 |
|---|---|---|---|---|---|---|---|---|
| Output | 72 | 76 | 80 | 84 | 88 | 88 | 88 | 88 |

Referring to Table 9, in a case that the second priority is higher than the first priority (e.g., in a case that the second audio signal is a call translation signal), and in a case that the second audio signal is output through a speaker (or speaker mode) other than a receiver, a volume of the second audio signal of the electronic device 101 may be set to have a range of 8 to 12 steps among the 15 steps according to the media volume table. According to an embodiment, in a case that the second audio signal is output through the speaker (or speaker mode) other than the receiver, a maximum output may be limited to a designated output (e.g., 88%). In order to prevent an echo from being transmitted to a counterpart through the speaker mode, the output may be limited to a designated output (e.g., 88%).

**[Table 10]**

| Step | 8 | 9 | 10 | 11 | 12 | 13 | 14 | 15 |
|---|---|---|---|---|---|---|---|---|
| Output | 72 | 76 | 80 | 84 | 88 | 92 | 96 | 100 |

Referring to Table 10, in a case that the second priority is higher than the first priority (e.g., in a case that the second audio signal is a call translation signal), and in a case that the second audio signal is output through the receiver (or in a case that the second audio signal is output through the external speaker 275), a volume of the second audio signal of the electronic device 101 may be set to have a range of 8 to 15 steps among the 15 steps according to the media volume table. According to an embodiment, in a case that the second audio signal is output through the receiver, a maximum output may not be limited. However, it is not limited thereto.

For example, referring to FIG. 15B, a reference numeral 1505 may exemplify a situation in which the electronic device 101 plays the first audio signal and the second audio signal through the speaker 270 or 275 in a state that the first application and the second application are activated. For example, the reference numeral 1505 may display a menu 491 or 495 indicating the volume step on a screen 430 as the electronic device 101 obtains the second volume control input.

For example, the reference numeral 1505 may exemplify a situation in which a volume step of the first audio signal is 4 and a volume step of the second audio signal is 11. The electronic device 101 may change the volume step of the first audio signal to 5 and change the volume step of the second audio signal to 12 based on the second volume control input for increasing a volume. Accordingly, referring to a reference numeral 1507, the volume step displayed through the menu 491 or 495 may be changed from 4 to 5 and 11 to 12, respectively.

According to an embodiment, the first priority and the second priority may be determined with reference to Table 2.

According to an embodiment, various volume tables may be provided. For example, volume tables different from each other may be provided according to a type of an audio signal (e.g., music, an alarm, or a notification) and an audio output device (e.g., an earpiece, Bluetooth, or a USB headset).

According to an embodiment, the electronic device 101 may control a volume of the first audio signal within a volume range as illustrated in Table 11 below or Table 12 below.

**[Table 11]**

| Step | 1 | 2 | 3 | 4 | 5 | 6 | 6 | 6 |
|---|---|---|---|---|---|---|---|---|
| Output | 51 | 58 | 65 | 72 | 79 | 86 | 86 | 86 |

Referring to Table 11, in a case that the first audio signal is output through the speaker (or speaker mode) rather than the receiver, a maximum output of a volume of the first audio signal of the electronic device 101 may be limited to a designated output (e.g., 86%).

**[Table 12]**

| Step | 1 | 2 | 3 | 4 | 5 | 4 | 3 | 2 |
|---|---|---|---|---|---|---|---|---|
| Output | 51 | 58 | 65 | 72 | 79 | 72 | 65 | 58 |

Referring to Table 12, in a case that a volume control input is continuously input, the electronic device 101 may increase an output of a volume of the first audio signal and then decrease after a specific output.

According to an embodiment, a table for an output of a volume of the first audio signal among Table 5, Table 6, Table 11, or Table 12 may be determined according to a predetermined condition. In addition, a table for an output of a volume of the second audio signal among Table 7, Table 8, Table 9, or Table 10 may be determined according to a predetermined condition. However, it is not limited thereto. A range of a volume of the first audio signal and/or the second audio signal may be dynamically generated based on a generative AI model. According to an embodiment, the range of a volume of the first audio signal and/or the second audio signal may be determined by a sound path through which an audio signal is generated (or an app that generates an audio signal). According to an embodiment, a range of a volume of the first audio signal and/or the second audio signal may be determined by a preset priority. However, it is not limited thereto.

According to an embodiment, in a case that the number of audio signals output through the speaker 270 or 275 is 3 or more, audio signals may output through various combinations of Tables 5 to 10. For example, in a case that the first audio signal is a call voice signal, the second audio signal is a call translation signal, a third audio signal is a notification signal, and audio signals are output through the speaker (or speaker mode) other than the receiver, each of the first to third audio signals may output with a volume range of Table 5, Table 9, and Table 7. For example, in a case that the first audio signal is a call voice signal, the second audio signal is a call translation signal, the third audio signal is a notification signal, and audio signals are output through the receiver, each of the first to third audio signals may output with a volume range of Table 5, Table 10, and Table 7.

According to an embodiment, in a case that the priority of the first audio signal and the second audio signal is identical to each other, the first audio signal and the second audio signal may output with an identical volume range (e.g., the volume range according to Table 5).

According to an embodiment, the volumes of both the first audio signal and the second audio signal may not be controlled based on the second volume control input. For example, based on a priority between applications being executed (or generating an audio signal), the electronic device 101 may identify an application of which a volume is controlled according to the second volume control input. For example, while a sub-application is being executed, a volume of a main application may not be controlled according to the second volume control input. Thereafter, based on the sub-application being terminated, a volume of a main application may be controlled according to the second volume control input. For example, the sub-application may be an application that generates an audio signal with a low priority. For example, the main application may be an application that generates an audio signal with a high priority.

For example, in a case that the main application is a call application and the sub-application is an AI module, the electronic device 101 may control only a volume of the second audio signal based on the second volume control input. In this case, a volume of the first audio signal may not be controlled. However, it is not limited thereto. In a case that the main application is a call application and the sub-application is an AI module, the electronic device 101 may increase only a volume of the second audio signal and may not control a volume of the first audio signal based on the second volume control input for increasing a volume. In a case that the main application is a call application and the sub-application is an AI module, the electronic device 101 may maintain a volume of the second audio signal and decrease only a volume of the first audio signal based on the second volume control input for decreasing a volume.

For example, in a case that the main application is a game application and the sub-application is a call application, the electronic device 101 may control only a volume of an audio signal of the call application based on the second volume control input. In this case, a volume of an audio signal of the game application may not be controlled.

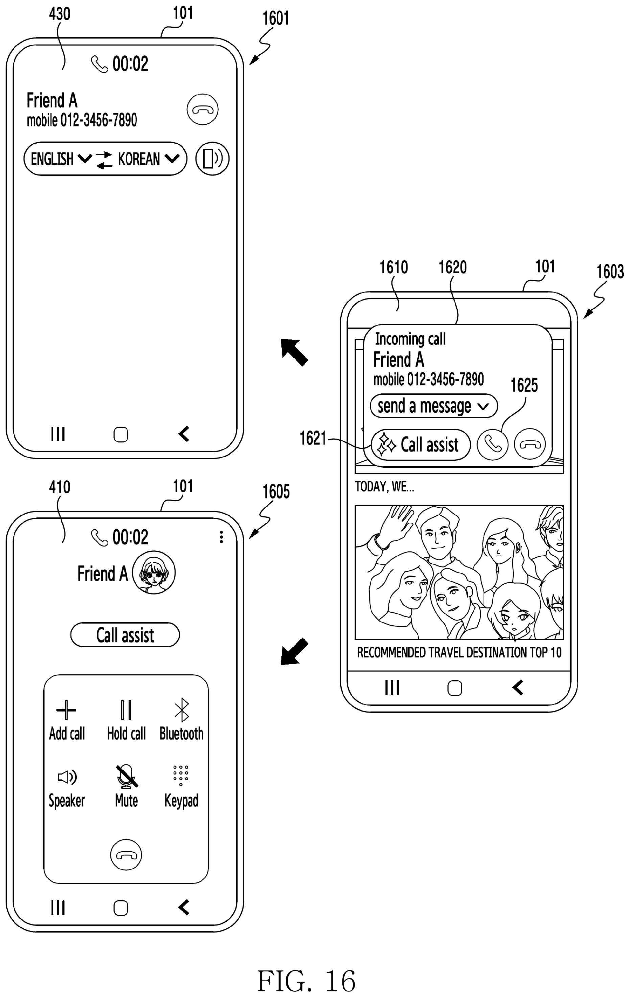

FIG. 16 illustrates an example of a screen displayed by an electronic device according to an embodiment.

Referring to a reference numeral 1603 of FIG. 16, an electronic device 101 may display a screen 1620 indicating that a connection request of a phone call is received while displaying a screen 1610 by executing any application. For example, the screen 1620 may include an icon 1621 for displaying a screen that provides a translation function and an icon 1625 for displaying a general phone screen.

Referring to a reference numeral 1601 of FIG. 16, based on obtaining an input for selection of the icon 1621, the electronic device 101 may display a screen 430. Referring to a reference numeral 1605 of FIG. 16, based on obtaining an input for selection of the icon 1625, the electronic device 101 may display a screen 410. However, it is not limited thereto. For example, the electronic device 101 may display a previously displayed screen based on obtaining an input for a call connection. For example, the electronic device 101 may first display the screen 430 based on obtaining an input for a call connection.

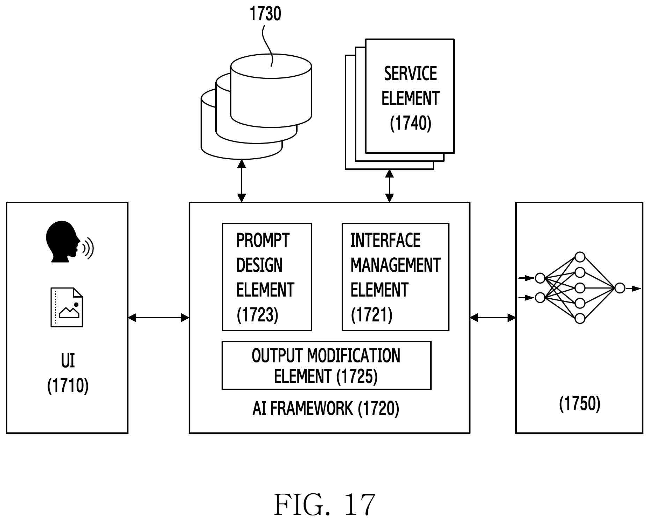

FIG. 17 is a diagram illustrating a structure of a generative AI model of an electronic device according to an embodiment.

FIG. 17 may be described with reference to FIG. 1, 2A, or 2B.

In an embodiment, a user interface (UI) 1710 may be an element for an interaction between an electronic device 101 and a user. For example, the UI 1710 may be an element for receiving (or obtaining) an input of the user. For example, the UI 1710 may be an element for providing (or outputting) a result of the input of the user.

In an embodiment, the UI 1710 may be a graphic UI (GUI) for an interaction with the user through a display 260 (e.g., obtaining a touch input and/or displaying a result). In an embodiment, the UI 1710 may be a voice UI (VUI) (or an auditory UI (AUI)) for an interaction with the user through the sound output module 155 (or the audio module 170) (e.g., obtaining a voice signal and/or outputting an audio signal). In an embodiment, the UI 1710 may be a natural UI (NUI) for an interaction with the user through a camera module 180 (e.g., obtaining a gesture or a gaze of the user). In an embodiment, the UI 1710 may be a physical UI (PUI) (or a tangible UI (TUI)) for an interaction with the user through the input module 150 (e.g., an input to a physical button).

In an embodiment, the UI 1710 may be a configuration for an interaction between the electronic device 101 and the user for a query of the user and/or a response to the query. In an embodiment, the UI 1710 may receive an input of the user. For example, the input of the user may include a natural language input (e.g., a voice signal input, and/or a text input), and/or an input of selecting (or indicating) content (e.g., an image and/or a video). In addition, the user input may also be possible in a form in which the above-described natural language, an image, sound, and context information are mixed. In addition, the user input may also be in a non-natural language form such as selecting a menu.

In an embodiment, the UI 1710 may identify (or obtain) information on a context associated with a time point (or a situation) at which an input of the user is obtained, for a query of the user and/or a response to the query. In an embodiment, the information on a context may include additional information at the time point of the user input. For example, the additional information may include information on an application currently being used by the user or position information of the user (or the electronic device 101).

In an embodiment, the electronic device 101 may output a result of a generative AI model 1750 to the user through the UI 1710. In an embodiment, the output may have a natural language form or a specific content form. In an embodiment, the output may be provided in a form (e.g., an action) requested by the user.

In an embodiment, the UI 1710 may transmit information on an input of the user and/or a context to an artificial intelligence (AI) framework 1720. In an embodiment, the AI framework 1720 may obtain the information on an input of the user and/or a context from the UI 1710.

In an embodiment, the AI framework 1720 may coordinate and/or control each of components (e.g., an interface management element 1721, a prompt design element 1723, or an output modification element 1725) necessary to perform an operation according to an intention of the user identified based on a query of the user (or a query included in a user input).

In an embodiment, the AI framework 1720 may transmit the user input obtained from the UI 1710 to the prompt design element 1723.

In an embodiment, the prompt design element 1723 may generate a prompt suitable for inputting a user input into the generative AI model 1750 (e.g., a large language model (LLM) and/or a large multimodal model (LMM)).

In an embodiment, the prompt design element 1723 may be an AI component using a machine learning algorithm or a neural network. Accordingly, a prompt generated by the prompt design element 1723 may be changed by learning.

In an embodiment, the prompt design element 1723 may generate a prompt by accessing a knowledge element (or knowledge archive 1730) including user preference data, a prompt library, and a prompt example based on a user input, and may transmit the generated prompt to the generative AI model 1750 (e.g., the LLM and/or the LMM).

In an embodiment, the interface management element 1721 may communicate with an external element. In an embodiment, in a case that a request for additional information exists when transmitting a user input (or a prompt based on the user input) to an input of the generative AI model 1750, the interface management element 1721 may obtain the additional information from an external element. In an embodiment, the interface management element 1721 may establish a channel that may communicate with an outside of the AI framework 1720 through an application programming interface (API), and may allow the AI framework 1720 to access various data sources (e.g., the knowledge archive 1730) through the established channel. In addition, in a case that the interface management element 1721 should perform an action that ultimately performs an input of the user, other than an intermediate result, in an application and/or a service, it may request the action to a service element 1740 through the API. The information obtained from the external element may be used to generate a prompt in the prompt design element 1723 together with the user input or may be transmitted as an input to the generative AI model 1750.

In an embodiment, the output modification element 1725 may fine tune a result output from the generative AI model 1750. For example, the output modification element 1725 may verify (e.g., verify relevance, bias, and/or harmfulness) content generated through the generative AI model 1750 (e.g., the LLM and/or the LMM). In addition, the output modification element 1725 may determine how well the output result matches a desired result of the user and proceed with an additional task for additional adjustment if the additional adjustment is required. Additionally, the output modification element 1725 may provide the user with a hint for preventing (or decreasing) an undesired output.

In an embodiment, in general, the generative AI model 1750 may refer to an artificial intelligence neural network that generates a new type of data depending on user input information. The generative AI model 1750 may include a model that generates an image and/or a model that generates a language. The model that generates an image may include a generative adversarial network (GAN), a variational auto encoder (VAE), and/or a diffusion-based generative model that uses the VAE and a transformer structure. The model that generates a language may be a model trained to output the most statistically appropriate output value based on an input value. For example, a language-generating model may include a model such as CHAT-GPT 3 or CHAT-GPT 4. In addition, the generative AI model 1750 may be an LMM that may recognize various types of data input such as a character, an image, and a voice and generate new data corresponding thereto.

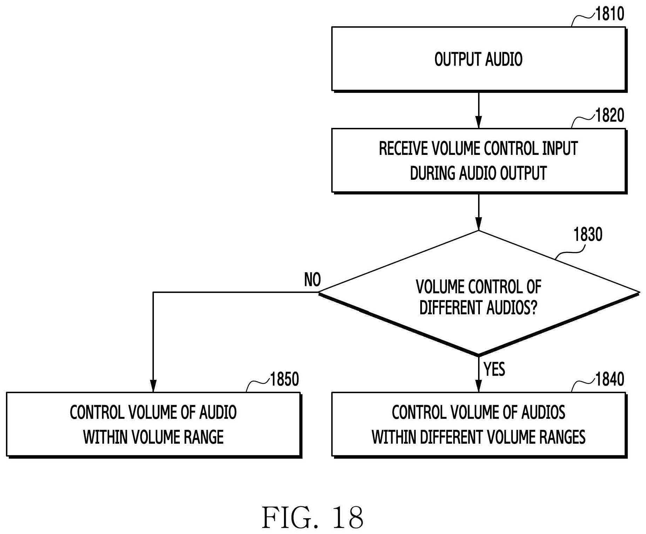

FIG. 18 is a flowchart illustrating an operation of an electronic device according to an embodiment.

For description of FIG. 18, FIGS. 1, 2A, 2B, 3A, 3B, 4A, 4B, 4C, and 4D may be referred to.

Operations of FIG. 18 may be performed by an electronic device 101. The operations of FIG. 18 may be performed by the electronic device 101 as a processor 120 of the electronic device 101 executes instructions stored in memory 130.

Referring to FIG. 18, in operation 1810, the electronic device 101 may output audio through a speaker 270 or 275.

In an embodiment, the electronic device 101 may receive a first audio signal from a first application (e.g., a phone APP 210) using the communication circuitry 290. In an embodiment, the electronic device 101 may output a first audio corresponding to the first audio signal through the speaker 270 or 275.

In an embodiment, the electronic device 101 may obtain a second audio signal from a second application (e.g., an AI module 220, a video playback application, and/or a music playback application) while outputting the first audio. In an embodiment, the electronic device 101 may output a second audio corresponding to the second audio signal through the speaker 270 or 275 while outputting the first audio.

In operation 1820, the electronic device 101 may receive a volume control input during the audio output. For example, the volume control input may include a press (or push) for an input module 150. However, it is not limited thereto. For example, the volume control input may include a touch input to a menu 480 for controlling a volume of audio.

In operation 1830, the electronic device 101 may determine whether volume control of different audios is required. In an embodiment, the electronic device 101 may determine whether volume control of different audios is required based on the number, a type, and/or a priority of audio output through the speaker 270 or 275. However, it is not limited thereto.

For example, in a case that the number of audio output through the speaker 270 or 275 is one (e.g., in a case of only outputting the first audio), the electronic device 101 may determine that the volume control of different audios is not required. For example, in a case that the number of audio output through the speaker 270 or 275 is 2 or more (e.g., in a case of outputting the first audio and the second audio), the electronic device 101 may determine that the volume control of different audios is required.

In operation 1830, in a case that the volume control of different audios is required, the electronic device 101 may perform operation 1840. In operation 1830, in a case that the volume control of different audios is not required, the electronic device 101 may perform operation 1850.

In the operation 1840, the electronic device 101 may control a volume of the audios within different volume ranges. For example, the electronic device 101 may control the volume of the first audio within a first volume range. For example, the electronic device 101 may control a volume of the second audio within a second volume range.

In the operation 1850, the electronic device 101 may control a volume of the audio within a volume range. For example, the electronic device 101 may control a volume of the first audio within a third volume range based on the first volume control input.

In an embodiment, each of the first volume range and the third volume range may be divided into identical N volume steps. In an embodiment, the second volume range may be included within a fourth volume range of a volume of the second audio while the second audio is output without the first audio.

In an embodiment, an upper limit value and a lower limit value of the first volume range may be determined based on a relationship between a first priority of the first audio and a second priority of the second audio.

In an embodiment, based on the second priority of the second audio being higher than the first priority of the first audio, the second volume range may have a volume range in which a minimum value and a maximum value of the third volume range are decreased. In an embodiment, based on the second priority being not higher than the first priority, the second volume range may be identical to the third volume range.

An upper limit value and a lower limit value of the first volume range may be changed based on a type of the speaker through which the first audio and the second audio are output.

An electronic device 101 as described above may include communication circuitry 290. The electronic device 101 may include at least one processor 120. The electronic device 101 may include memory 130 including one or more storage media storing instructions. The instructions, when executed, individually or collectively, by the at least one processor 120, may cause the electronic device 101 to establish a call connection with an external electronic device 102 through the communication circuitry 290. The instructions, when executed, individually or collectively, by the at least one processor 120, may cause the electronic device 101 to obtain a first audio signal from the external electronic device 102 through the communication circuitry 290 during the call connection. The instructions, when executed, individually or collectively, by the at least one processor 120, may cause the electronic device 101 to translate a first utterance included in the first audio signal into a second utterance in a designated language. The instructions, when executed, individually or collectively, by the at least one processor 120, may cause the electronic device 101 to set an intensity of a first volume in which the first audio signal is output to be less than an intensity of a second volume in which a second audio signal including the second utterance is output.

An electronic device 101 as described above may include communication circuitry 290. The electronic device 101 may include at least one processor 120. The electronic device 101 may include memory 130 including one or more storage media storing instructions. The instructions, when executed, individually or collectively, by the at least one processor 120, may cause the electronic device 101 to establish a call connection with an external electronic device 102 through the communication circuitry 290. The instructions, when executed, individually or collectively, by the at least one processor 120, may cause the electronic device 101 to obtain a first audio signal from the external electronic device 102 through the communication circuitry 290 during the call connection. The instructions, when executed, individually or collectively, by the at least one processor 120, may cause the electronic device 101 to obtain an input for adjusting an intensity of a volume during the call connection. The instructions, when executed, individually or collectively, by the at least one processor 120, may cause the electronic device 101 to adjust, based on the input, an intensity of a first volume of the first audio signal and/or an intensity of a second volume of a second audio signal output together with the first audio signal.

The instructions, when executed, individually or collectively, by the at least one processor 120, may cause the electronic device 101 to obtain an input for adjusting the intensity of the first volume. The instructions, when executed, individually or collectively, by the at least one processor 120, may cause the electronic device 101 to adjust, based on the input, the intensity of the first volume and the intensity of the second volume.

The electronic device 101 may include a physical button 150. The instructions, when executed, individually or collectively, by the at least one processor 120, may cause the electronic device 101 to obtain the input based on the physical button 150 being pressed.

In an embodiment, during the call connection, the number of steps in which the intensity of the second volume is adjusted may be changed to be equal to or less than the number of steps in which the intensity of the first volume is adjusted.

The instructions, when executed, individually or collectively, by the at least one processor 120, may cause the electronic device 101 to increase the intensity of the second volume in which the second audio signal is output during a time section in which a first output of the first audio signal and a second output of the second audio signal overlap, or a time section in which overlapping is probable to be greater than the intensity of the second volume in which the second audio signal is output in a time section other than the time section. The instructions, when executed, individually or collectively, by the at least one processor 120, may cause the electronic device 101 to decrease the intensity of the volume in which the audio signal is output during a time section in which a first output of the audio signal and a second output of the another audio signal overlap, or a time section in which overlapping is probable to be less than the intensity of the volume in which the audio signal is output in a time section other than the time section.

The instructions, when executed, individually or collectively, by the at least one processor 120, may cause the electronic device 101 to identify an audio signal output device through which the first audio signal and the second audio signal are output. The instructions, when executed, individually or collectively, by the at least one processor 120, may cause the electronic device 101 to set the intensity of the first volume and the intensity of the second volume to intensities defined for the identified audio signal output device.

The electronic device 101 may include a speaker 270. In an embodiment, a maximum intensity of the second volume in a case that the audio signal output device is a speaker 275 external to the electronic device 101 may be set to be lower than a maximum intensity of the second volume in a case that the audio signal output device is the speaker 270.

In an embodiment, during the call connection, the intensity of the second volume may be set to an intensity obtained by adding a designated first offset to the intensity of the second volume or a lower intensity among a designated maximum intensity.

The instructions, when executed, individually or collectively, by the at least one processor 120, may cause the electronic device 101 to set an intensity of a third volume in which a third audio signal of a designated type distinguished from the first audio signal or the second audio signal is output during the call connection to be less than the intensity of the first volume.

The instructions, when executed, individually or collectively, by the at least one processor 120, may cause the electronic device 101 to identify an application requesting an output of the third audio signal during the call connection. The instructions, when executed, individually or collectively, by the at least one processor 120, may cause the electronic device 101 to set the intensity of the third volume to be greater than the intensity of the first volume based on the application operating in a foreground. The instructions, when executed, individually or collectively, by the at least one processor 120, may cause the electronic device 101 to set the intensity of the third volume to be less than the intensity of the first volume based on the application operating in a background.

A method as described above may be performed by an electronic device 101 including communication circuitry 290. The method may include establishing a call connection with an external electronic device 102 through the communication circuitry 290. The method may include obtaining a first audio signal from the external electronic device 102 through the communication circuitry 290 during the call connection. The method may include translating a first utterance included in the first audio signal into a second utterance of a designated language. The method may include setting an intensity of a first volume in which the first audio signal is output to be less than an intensity of a second volume in which a second audio signal including the second utterance is output.

A method as described above may be performed by an electronic device 101 including communication circuitry 290. The method may include establishing a call connection with an external electronic device 102 through the communication circuitry 290. The method may include obtaining a first audio signal from the external electronic device 102 through the communication circuitry 290 during the call connection. The method may include obtaining an input for adjusting an intensity of a volume during the call connection. The method may include adjusting an intensity of a first volume of the first audio signal and/or an intensity of a second volume of a second audio signal output together with the first audio signal based on the input.

The method may include obtaining an input for adjusting the intensity of the first volume. The method may include adjusting the intensity of the first volume and the intensity of the second volume based on the input.

The method may include obtaining the input based on a physical button 150 of the electronic device 101 being pressed.

In an embodiment, during the call connection, the number of steps in which the intensity of the second volume is adjusted may be changed to be equal to or less than the number of steps in which the intensity of the first volume is adjusted.

The method may include increasing the intensity of the second volume in which the second audio signal is output during a time section in which a first output of the first audio signal and a second output of the second audio signal overlap to be greater than the intensity of the second volume in which the second audio signal is output in a time section other than the time section. The method may include decreasing the intensity of the volume in which the audio signal is output during a time section in which a first output of the audio signal and a second output of the another audio signal overlap to be less than the intensity of the volume in which the audio signal is output in a time section other than the time section.

The method may include identifying an audio signal output device through which the first audio signal and the second audio signal are output. The method may include setting the intensity of the first volume and the intensity of the second volume to intensities defined for the identified audio signal output device.

In an embodiment, a maximum intensity of the second volume in a case that the audio signal output device is a speaker 275 external to the electronic device 101 may be set to be lower than a maximum intensity of the second volume in a case that the audio signal output device is a speaker 270 of the electronic device 101.

During the call connection, the intensity of the first volume may be set to an intensity obtained by adding a designated first offset to the intensity of the second volume or a lower intensity among a designated maximum intensity.

The method may include setting an intensity of a third volume in which a third audio signal of a designated type distinguished from the first audio signal or the second audio signal is output during the call connection to be less than the intensity of the first volume.

The method may include identifying an application requesting an output of the third audio signal during the call connection. The method may include setting the intensity of the third volume to be greater than the intensity of the first volume based on the application operating in a foreground. The method may include setting the intensity of the third volume to be less than the intensity of the first volume based on the application operating in a background.

A non-transitory computer readable storage medium as described above may store a program including instructions. The instructions, when executed, individually or collectively, by the at least one processor 120, may cause the electronic device 101 to establish a call connection with an external electronic device 102 through the communication circuitry 290. The instructions, when executed, individually or collectively, by the at least one processor 120 of the electronic device 101 including the communication circuitry 290, may cause the electronic device 101 to obtain a first audio signal from the external electronic device 102 through the communication circuitry 290 during the call connection. The instructions, when executed, individually or collectively, by the at least one processor 120, may cause the electronic device 101 to translate a first utterance included in the first audio signal into a second utterance in a designated language. The instructions, when executed, individually or collectively, by the at least one processor 120, may cause the electronic device 101 to set an intensity of a first volume in which the first audio signal is output to be less than an intensity of a second volume in which a second audio signal including the second utterance is output.

A non-transitory computer readable storage medium as described above may store a program including instructions. The instructions, when executed, individually or collectively, by the at least one processor 120, may cause the electronic device 101 to establish a call connection with an external electronic device 102 through the communication circuitry 290. The instructions, when executed, individually or collectively, by the at least one processor 120, may cause the electronic device 101 to obtain a first audio signal from the external electronic device 102 through the communication circuitry 290 during the call connection. The instructions, when executed, individually or collectively, by the at least one processor 120, may cause the electronic device 101 to obtain an input for adjusting an intensity of a volume during the call connection. The instructions, when executed, individually or collectively, by the at least one processor 120, may cause the electronic device 101 to adjust, based on the input, an intensity of a first volume of the first audio signal and/or an intensity of a second volume of a second audio signal output together with the first audio signal.

An electronic device 101 as described above may include a speaker, communication circuitry 290, at least one processor 120, and memory 130 including one or more storage media storing instructions. The instructions, when executed, individually or collectively, by the at least one processor 120, may cause the electronic device 101 to receive a first audio signal from a first application using the communication circuitry. The instructions, when executed, individually or collectively, by the at least one processor 120, may cause the electronic device 101 to output first audio based on the first audio signal through the speaker. The instructions, when executed, individually or collectively, by the at least one processor 120, may cause the electronic device 101 to, while outputting the first audio through the speaker, receive a first volume control input. The instructions, when executed, individually or collectively, by the at least one processor 120, may cause the electronic device 101 to, based on the first volume control input, control a volume of the first audio within a first volume range. The instructions, when executed, individually or collectively, by the at least one processor 120, may cause the electronic device 101 to, based on obtaining a second audio signal from a second application while outputting the first audio, output second audio through the speaker. The instructions, when executed, individually or collectively, by the at least one processor 120, may cause the electronic device 101 to, based on receiving a second volume control input while outputting the first audio and the second audio through the speaker, control the volume of the first audio within a second volume range, and control a volume of the second audio within a third volume range.

Each of the first volume range and the second volume range may be divided into N volume steps, and the N may be an integer.

The instructions, when executed, individually or collectively, by the at least one processor 120, may cause the electronic device 101 to, while outputting the second audio through the speaker without the output of the first audio, receive a third volume control input. The instructions, when executed, individually or collectively, by the at least one processor 120, may cause the electronic device 101 to, based on the third volume control input, control the volume of the second audio within a fourth volume range including the third volume range.

The instructions, when executed, individually or collectively, by the at least one processor 120, may cause the electronic device 101 to, based on receiving a third volume control input while playing the second audio signal through the speaker without the first audio signal, control a volume of the second audio signal within a fourth volume range including a third volume range.

The third volume range may be divided into N volume steps identical to the first volume range and the second volume range. The fourth volume range may be divided into M volume steps, the M being greater than the N. The N and the M may be integers. An upper limit value of the fourth volume range may be greater than an upper limit value of the third volume range, or a lower limit value of the fourth volume range may be less than a lower limit value of the third volume range.

An upper limit value and a lower limit value of the third volume range may be determined based on a relationship between a first priority of the first audio signal and a second priority of the second audio signal.

Based on the second priority of the second audio being higher than the first priority of the first audio, the second volume range may have a volume range in which an upper limit value and a lower limit value of the first volume range are decreased. Based on the second priority not being higher than the first priority, the second volume range may be identical to the first volume range.

The upper limit value and the lower limit value of the third volume range may be changed based on a type of the speaker through which the first audio and the second audio are output.

The first audio signal may be obtained from a counterpart electronic device through the first application. The second audio signal may correspond to a translation of a first utterance included in the first audio signal.

The instructions, when executed, individually or collectively, by the at least one processor 120, may cause the electronic device 101 to, based on the second volume control input, control the volume of the first audio and the volume of the second audio such that the volume of the first audio controlled within the second volume range is lower than the volume of the second audio controlled within the third volume range.

The first application may be an application for obtaining the first audio signal from the counterpart electronic device through the communication circuitry 290 during a call connection with the counterpart electronic device. The second application may be an application for generating a second audio signal representing a translation of an utterance included in the first audio signal.

An electronic device 101 as described above may include a speaker, at least one processor 120, and memory 130 including one or more storage media storing instructions. The instructions, when executed, individually or collectively, by the at least one processor 120, may cause the electronic device 101 to receive a first audio signal from a first application through a first pass. The instructions, when executed, individually or collectively, by the at least one processor 120, may cause the electronic device 101 to receive a second audio signal from a second application through a second pass. The instructions, when executed, individually or collectively, by the at least one processor 120, may cause the electronic device 101 to, based on receiving a volume control input while outputting a first audio based on the first audio signal and a second audio based on the second audio signal through the speaker, control a volume of the first audio within a first volume range and control a volume of the second audio within a second volume range.

The first volume range and the second volume range may be divided into N volume steps, and the N may be an integer.

An upper limit value and a lower limit value of the second volume range may be changed based on a relationship between a first priority of the first audio signal and a second priority of the second audio signal.

An upper limit value and a lower limit value of the second volume range may be changed based on a type of the speaker through which the first audio signal and the second audio signal are played.

An electronic device 101 as described above may include a speaker, at least one processor 120, and memory 130 including one or more storage media storing instructions. The instructions, when executed, individually or collectively, by the at least one processor 120, may cause the electronic device 101 to receive a first audio signal from a first application using the communication circuitry. The instructions, when executed, individually or collectively, by the at least one processor 120, may cause the electronic device 101 to, based on receiving a first volume control input while outputting a first audio based on the first audio signal through the speaker, control a volume of the first audio within a first volume range. The instructions, when executed, individually or collectively, by the at least one processor 120, may cause the electronic device 101 to, based on obtaining a second audio signal from a second application while outputting the first audio, output a second audio based on the second audio signal through the speaker together with the first audio. The instructions, when executed, individually or collectively, by the at least one processor 120, may cause the electronic device 101 to, based on receiving a second volume control input while outputting the first audio and the second audio through the speaker, control a volume of the second audio within a second volume range without controlling a volume of the first audio.

An electronic device 101 as described above may include communication circuitry 290, at least one processor 120, and memory 130 including one or more storage media storing instructions. The instructions, when executed, individually or collectively, by the at least one processor 120, may cause the electronic device 101 to obtain a first audio signal from an external electronic device 102 through the communication circuitry 290. The instructions, when executed, individually or collectively, by the at least one processor 120, may cause the electronic device 101 to identify a second audio signal generated by the electronic device 101. The instructions, when executed, individually or collectively, by the at least one processor 120, may cause the electronic device 101 to, while outputting first audio based on the first audio signal and second audio based on the second audio signal, obtain an input for adjusting an intensity of audio. The instructions, when executed, individually or collectively, by the at least one processor 120, may cause the electronic device 101 to, based on the input, adjust an intensity of at least one audio selected from the first audio or the second audio.

The instructions, when executed, individually or collectively, by the at least one processor 120, may cause the electronic device 101 to translate a first utterance included in the first audio signal into a second utterance in a designated language. The instructions, when executed, individually or collectively, by the at least one processor 120, may cause the electronic device 101 to set the intensity of the first audio to be less than the intensity of the second audio including the second utterance.

The instructions, when executed, individually or collectively, by the at least one processor 120, may cause the electronic device 101 to, based on the input being an input for increasing the intensity of the audio, increase the intensity of the second audio while maintaining the intensity of the first audio.

Based on the input being an input for decreasing the intensity of the audio, it may cause the intensity of the first audio to decrease while maintaining the intensity of the second audio.

The instructions, when executed, individually or collectively, by the at least one processor 120, may cause the electronic device 101 to, based on the second audio representing a translation of an utterance included in the first audio signal, based on the input, adjust the intensity of the second audio instead of adjusting the intensity of the first audio.

The instructions, when executed, individually or collectively, by the at least one processor 120, may cause the electronic device 101 to identify an audio signal output device through which the first audio and the second audio are output. The instructions, when executed, individually or collectively, by the at least one processor 120, may cause the electronic device 101 to set the intensity of the first audio and the intensity of the second audio to intensities defined for the identified audio signal output device.

The instructions, when executed, individually or collectively, by the at least one processor 120, may cause the electronic device 101 to set an intensity of a third audio based on a third audio signal of a designated type distinguished from the first audio signal or the second audio signal to be less than the intensity of the first audio while the first audio is output.

The instructions, when executed, individually or collectively, by the at least one processor 120, may cause the electronic device 101 to identify an application requesting an output of the third audio while the first audio is output. The instructions, when executed, individually or collectively, by the at least one processor 120, may cause the electronic device 101 to set the intensity of the third audio to be greater than the intensity of the first volume based on the application operating in a foreground. The instructions, when executed, individually or collectively, by the at least one processor 120, may cause the electronic device 101 to set the intensity of the third audio to be less than the intensity of the first audio based on the application operating in a background.

A method of an electronic device 101 including communication circuitry 290 may include obtaining a first audio signal from an external electronic device 102 through the communication circuitry 290. The method may include identifying a second audio signal generated by the electronic device 101. While outputting a first audio based on the first audio signal and a second audio based on the second audio signal, the method may include obtaining an input for adjusting an intensity of the audio. The method may include adjusting an intensity of at least one audio selected from the first audio or the second audio based on the input.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a speaker;
communication circuitry (290);
at least one processor (120); and
memory (130) comprising one or more storage media storing instructions,
wherein the instructions, when executed, individually or collectively, by the at least one processor (120), cause the electronic device (101) to:
receive a first audio signal from a first application using the communication circuitry;
output first audio based on the first audio signal through the speaker;
while outputting the first audio through the speaker, receive a first volume control input;
based on the first volume control input, control a volume of the first audio within a first volume range;
based on obtaining a second audio signal from a second application while outputting the first audio, output second audio through the speaker; and
based on receiving a second volume control input while outputting the first audio and the second audio through the speaker:
control the volume of the first audio within a second volume range; and
control a volume of the second audio within a third volume range.

2. The electronic device of claim 1,
wherein each of the first volume range and the second volume range is divided into N volume steps, and
wherein the N is an integer.

3. The electronic device of claim 1 or claim 2,
wherein the instructions, when executed, individually or collectively, by the at least one processor (120), cause the electronic device (101) to:
while outputting the second audio through the speaker without the output of the first audio, receive a third volume control input; and
based on the third volume control input, control the volume of the second audio within a fourth volume range including the third volume range.

4. The electronic device of claim 3,
wherein the third volume range is divided into N volume steps identical to the first volume range and the second volume range,
wherein the fourth volume range is divided into M volume steps, the M being greater than the N,
wherein an upper limit value of the fourth volume range is greater than an upper limit value of the third volume range, or a lower limit value of the fourth volume range is less than a lower limit value of the third volume range, and
wherein the N and the M are integers.

5. The electronic device of any one of claims 1 to 4,
wherein an upper limit value and a lower limit value of the third volume range are determined based on a relationship between a first priority of the first audio and a second priority of the second audio.

6. The electronic device of any one of claims 1 to 5,
wherein, based on the second priority of the second audio being higher than the first priority of the first audio, the second volume range has a volume range in which an upper limit value and a lower limit value of the first volume range are decreased, and
wherein, based on the second priority not being higher than the first priority, the second volume range is identical to the first volume range.

7. The electronic device of any one of claims 1 to 6,
wherein the upper limit value and the lower limit value of the third volume range are changed based on a type of the speaker through which the first audio and the second audio are output.

8. The electronic device of any one of claims 1 to 7,
wherein the first audio signal is obtained from a counterpart electronic device through the first application, and
wherein the second audio signal corresponds to a translation of a first utterance included in the first audio signal.

9. The electronic device of any one of claims 1 to 8,
wherein the instructions, when executed, individually or collectively, by the at least one processor (120), cause the electronic device (101) to:
based on the second volume control input, control the volume of the first audio and the volume of the second audio such that the volume of the first audio controlled within the second volume range is lower than the volume of the second audio controlled within the third volume range.

10. The electronic device of any one of claims 1 to 9,
wherein the first application is an application for obtaining the first audio signal from the counterpart electronic device through the communication circuitry (290) during a call connection with the counterpart electronic device, and
wherein the second application is an application for generating a second audio signal representing a translation of an utterance included in the first audio signal.

11. An electronic device comprising:
communication circuitry (290);
at least one processor (120); and
memory (130) comprising one or more storage media storing instructions,
wherein the instructions, when executed, individually or collectively, by the at least one processor (120), cause the electronic device (101) to:
obtain a first audio signal from an external electronic device (102) through the communication circuitry (290);
identify a second audio signal generated by the electronic device (101);
while outputting first audio based on the first audio signal and second audio based on the second audio signal, obtain an input for adjusting an intensity of audio; and
based on the input, adjust an intensity of at least one audio selected from the first audio or the second audio.

12. The electronic device of claim 11,
wherein the instructions, when executed, individually or collectively, by the at least one processor (120), cause the electronic device (101) to:
translate a first utterance included in the first audio signal into a second utterance in a designated language; and
set the intensity of the first audio to be less than the intensity of the second audio including the second utterance.

13. The electronic device of claim 11 or claim 12,
wherein the instructions, when executed, individually or collectively, by the at least one processor (120), cause the electronic device (101) to:
based on the input being an input for increasing the intensity of the audio, increase the intensity of the second audio while maintaining the intensity of the first audio; and
based on the input being an input for decreasing the intensity of the audio, decrease the intensity of the first audio while maintaining the intensity of the second audio.

14. The electronic device of any one of claims 11 to 13,
wherein the instructions, when executed, individually or collectively, by the at least one processor (120), cause the electronic device (101) to:
based on the second audio representing a translation of an utterance included in the first audio signal, based on the input, adjust the intensity of the second audio instead of adjusting the intensity of the first audio.

15. The electronic device of any one of claims 11 to 14,
wherein the instructions, when executed, individually or collectively, by the at least one processor (120), cause the electronic device (101) to:
identify an audio signal output device through which the first audio and the second audio are output; and
set the intensity of the first audio and the intensity of the second audio to intensities defined for the identified audio signal output device.
